# EUROPEAN PATENT SPECIFICATION

(11) **EP 4 415 430 B1**
(45) Date of publication and mention of the grant of the patent: **18.12.2024**
(21) Application number: 23156288.5
(22) Date of filing: 13.02.2023
(51) Int. Cl.: H04W 48/18, H04W 60/00, H04W 12/069, H04W 48/08, H04W 76/15, H04W 12/40

(54) **METHOD FOR OPERATING A MOBILE STATION BEING IN A RADIO ENVIRONMENT COMPRISING A PLURALITY OF RADIO CELLS OF A PLURALITY OF MOBILE COMMUNICATION NETWORKS, MOBILE STATION, SYSTEM OR MOBILE COMMUNICATION NETWORK, PROGRAM AND COMPUTER PROGRAM PRODUCT**
VERFAHREN ZUM BETRIEB EINER MOBILSTATION IN EINER FUNKUMGEBUNG MIT MEHREREN FUNKZELLEN
PROCÉDÉ DE FONCTIONNEMENT D'UNE STATION MOBILE DANS UN ENVIRONNEMENT RADIO COMPRENANT UNE PLURALITÉ DE CELLULES RADIO

(43) Date of publication of application: 14.08.2024
(73) Proprietor: Deutsche Telekom AG, 53113 Bonn (DE)
(72) Inventor: BISCHINGER, Kurt, 1200 Wien (AT)
(74) Representative: Schwöbel, Thilo K.

(56) References cited:
- US-A1- 2020 351 652
- US-A1- 2022 104 313

## Description

### BACKGROUND

The present invention relates to a method for operating a mobile station being in a radio environment comprising a plurality of radio cells of a plurality of mobile communication networks, each one of these radio cells being associated, respectively, to at least one mobile communication network of the plurality of mobile communication networks, wherein, as a primary connection of the mobile station, the mobile station is connected to, or registered on, a first mobile communication network of the plurality of mobile communication networks and is, additionally and as a secondary connection of the mobile station, able to be connected to, or registered on, a second mobile communication network of the plurality of mobile communication networks.

Furthermore, the present invention relates to a mobile station for being operated in a radio environment comprising a plurality of radio cells of a plurality of mobile communication networks, each one of these radio cells being associated, respectively, to at least one mobile communication network of the plurality of mobile communication networks, wherein, as a primary connection of the mobile station, the mobile station is connected to, or registered on, a first mobile communication network of the plurality of mobile communication networks and is, additionally and as a secondary connection of the mobile station, able to be connected to, or registered on, a second mobile communication network of the plurality of mobile communication networks.

Additionally, the present invention relates to a system or a mobile communication network for operating a mobile station being in a radio environment comprising a plurality of radio cells of a plurality of mobile communication networks, each one of these radio cells being associated, respectively, to at least one mobile communication network of the plurality of mobile communication networks, wherein, as a primary connection of the mobile station, the mobile station is connected to, or registered on, a first mobile communication network of the plurality of mobile communication networks and is, additionally and as a secondary connection of the mobile station, able to be connected to, or registered on, a second mobile communication network of the plurality of mobile communication networks.

Furthermore, the present invention relates to a program and to a computer-readable medium for operating a mobile station being in a radio environment according to the inventive method.

In currently deployed mobile communication networks, a mobile station (typically a user equipment) typically experiences a radio environment comprising a plurality of radio cells. One such radio cell is typically provided by a base station entity. If this is the case, the radio environment of the mobile station comprises the considered radio cell. A plurality of radio cells (i.e. of base station entities) are typically part of a mobile communication network being a cellular mobile communication network. Hence, the plurality of radio cells of the radio environment of the mobile station are typically part of a plurality of mobile communication networks. Hence, by means of selecting a radio cell, the mobile station also selects a mobile communication network. However, before a mobile communication network is considered as a network selection candidate at all, the mobile station needs to find a suitable radio cell of a mobile communication network or public land mobile network to camp on. The criteria for a radio cell to be considered as suitable radio cell (to camp on), is dependent on the considered network technology (or radio access technology) being defined in or by means of the relevant standardization documents, mostly referred to 3GPP (third generation partnership project) documents. The (initial) selection of a mobile network by a mobile station or user equipment (network selection after power-on of the device or loss of connection) is specified (among others) in TS 23.122; a number of lists of networks are defined that determine the priority of network selection for a certain network, wherein the highest priority regarding network selection is given to the home network (or a plurality of equivalent home networks).

Especially since the specification of 5G in 3GPP, mobile stations or user equipments might also be registered in two different networks (or might even be required to be registered in two different networks), e.g. TS 22.261 defines "Multi-network connectivity and service delivery across operators" (clause 6.18 of TS 22.261 V16.16.0) or "Providing Access to Local Services" (clause 6.41 of TS 22.261 V18.7.0).

In the general context of multi-radio access technology, US 2022/0104313 A1 describes a session steering procedure for a user equipment that initially accesses a first radio access technology (RAT) communication system and subsequently discovers an available second RAT communication system, in which the traffic path is switched from the first to the second system using dual registration.

However, the process for the registration of the mobile station in an additional network (in addition to the primary connection of the mobile station) is not precisely defined or prioritized.

### SUMMARY

An object of the present invention is to provide a technically simple, effective and cost effective solution for operating a mobile station being in a radio environment comprising a plurality of radio cells of a plurality of mobile communication networks, the mobile station being connected to a first mobile communication network as a primary connection, and the mobile station additionally being able to be connected to a second mobile communication network. A further object of the present invention is to provide a corresponding mobile station, system or mobile communication network, and a corresponding program and computer-readable medium.

The invention is set out in the appended set of claims.

By means of using secondary network selection data, and the secondary network selection data being related, at least in part, to the first mobile communication network, it is advantageously possible according to the present invention to provide a mechanism to select a prioritized network for an additional connection (secondary network) in parallel to an existing connection to a network (primary network).

It is thereby advantageously possible, according to the present invention, to provide not only for a definition and/or prioritization of the network selection regarding the additional or secondary connection of the mobile station (to the second mobile communication network) but also for a coordination of the secondary network selection process with the primary network selection process and/or the first mobile communication network. It is furthermore advantageously possible according to the present invention, that - in case that the primary connection is interrupted or terminated - a connection of the mobile station - via the secondary connection - is maintained, and, hence, the mobile station is able to be provided with communication services and/or the quality-of-service enhanced, at least compared to a complete loss of connection that also extends to the secondary connection.

According to the present invention it is supposed that a mobile station (especially a user equipment, i.e. comprising the mobile equipment with a USIM or UMTS (universal mobile telecommunications system) subscriber identity module, or a mobile equipment (especially in case that standalone non-public network are concerned)) is used in a radio environment comprising a plurality of radio cells of a plurality of mobile communication networks. Each one of the plurality of radio cells is typically associated, respectively, to at least one mobile communication network. At a certain point (in time and at the current location of the user equipment), it is supposed according to the present invention, that the mobile station is already connected to one mobile communication network. This connection is, in the context of the present invention, also called primary connection of the mobile station, and the respective mobile communication network is, in the context of the present invention, also called first mobile communication network (of the plurality of mobile communication networks available to the mobile station). In addition to that primary connection (i.e. besides that primary connection) to the first mobile communication network, the mobile station is able to be connected to, or registered on, a second mobile communication network (of the plurality of mobile communication networks). This possible connection, to the second mobile communication network, is, in the context of the present invention, also called secondary connection of the mobile station.

The selection of the first mobile communication network is the result of a network selection process, hereinafter also called primary network selection process (i.e. the initial network selection process that is performed - according to the respective standardization documents, e.g. (among others) in TS 23.122, especially V18.0.0, clause 4.4 regarding the mobile station selecting a network among the available public land mobile networks (in case the mobile station is not operating in SNPN access mode), or clause 4.9 regarding the mobile station selecting a network among the available standalone non-public networks (in case the mobile station is operating in SNPN access mode) - in case that the mobile station does not have any connection at all to a mobile communication network, i.e., typically, after power-on and/or after loss of connection.

When conducting the primary network selection process, the mobile station takes into account, of course and necessarily, the radio environment at its current location, but it takes also into account network selection data being stored (typically in lists of networks being used for network selection) in a memory module of the mobile station (typically the USIM in case of the mobile station being a user equipment, or in another memory portion of the mobile equipment or mobile station in case that the mobile station does not comprise a USIM). As it is supposed that the mobile station is already connected to a mobile communication network (i.e. the primary connection to the first mobile communication network) at least part of the network selection data (of the considered mobile station) relate to or indicate the first mobile communication network.

In order for the mobile station (in this considered situation of the mobile station being connected to the first mobile communication network) to be additionally connected to, or registered on, a further mobile communication network (i.e. the second mobile communication network), the method according to the present invention comprises the following steps:
-- in a first step, the mobile station comprises or receives secondary network selection data regarding the secondary connection of the mobile station, the secondary network selection data being related, at least in part, to the first mobile communication network and indicating at least the second mobile communication network,
-- in a second step, the mobile station is connected to, or registered on, the second mobile communication network - in addition to being connected to, or registered on, the first mobile communication network - as a result of a secondary network selection process being performed taking into account the radio environment as well as the secondary network selection data (that are related, at least in part, to the first mobile communication network),
-- in a third step, and in case that the primary connection to the first mobile communication network is interrupted or terminated while the secondary connection to the second mobile communication network is still active or available, the secondary connection between the mobile station and the second mobile communication network is maintained.

Hence, according to the present invention and regarding the network selection of the secondary connection (to the second mobile communication network) of the mobile station, it is proposed that the secondary network selection process is influenced by the result of the primary network selection process. Stated otherwise, a mechanism is proposed to select a prioritized network for an additional connection (secondary connection to the second mobile communication network) in parallel to an existing (primary) connection in a network (first mobile communication network). Furthermore, service continuity is enhanced by means of maintaining the secondary connection in case of an interruption or termination of the primary connection.

In conventionally known telecommunications networks or mobile communication networks, a mobile station (typically a user equipment) typically experiences a radio environment (i.e. the different radio frequency signals that the mobile station - at its current position or location - is potentially able to receive on different frequencies and/or frequency bands and/or at different points in time or time intervals or time slots and/or according to different radio access technologies) comprising a plurality of radio cells that are at least detectable and/or receivable by the respective mobile station or user equipment.

One such radio cell is typically provided by a base station entity, i.e. an antenna arrangement of a specific base station entity emits radio frequency signals such that the mobile station, at its current position or location, is able to receive such radio frequency signals with a sufficient quality, typically with a sufficient signal to noise ratio. If this is the case, the radio environment of the mobile station comprises the considered radio cell. A plurality of radio cells (i.e. of base station entities) are typically part of a mobile communication network being a cellular mobile communication network.

Hence, the plurality of radio cells of the radio environment of the mobile station are typically part of a plurality of mobile communication networks, typically each one of these radio cells being associated, respectively, to either one mobile communication network of the plurality of mobile communication networks or to more than one mobile communication networks of the plurality of mobile communication networks.

Hence, by means of selecting a radio cell (out of the plurality of radio cells present or receivable of the radio environment at the considered position or location of the mobile station), the mobile station also selects a mobile communication network (that is associated to that radio cell).

However, before a mobile communication network is considered as a network selection candidate (i.e. a candidate mobile communication network) at all, the mobile station needs to find a suitable radio cell of a mobile communication network or public land mobile network to camp on. The criteria for a radio cell to be considered as suitable radio cell (to camp on), is dependent on the considered network technology (or radio access technology) being defined in or by means of the relevant standardization documents, mostly referred to 3GPP (third generation partnership project) documents.

The (initial) selection of a mobile network by a mobile station or user equipment (network selection after power-on of the device or loss of connection) - hereinafter also called primary connection of the mobile station - is specified (among others) in TS 23.122:
A number of lists of networks are defined that determine the priority of a network in the primary network selection process. Those lists are part of the network selection data of the mobile station and are, e.g., stored on the USIM (UMTS subscriber identity module) card or subscriber identity module or universal integrated circuit card of a user equipment (i.e. a mobile equipment, ME, or mobile station comprising a USIM) in case of public land mobile networks and/or those lists or corresponding network selection information could also be stored, especially for standalone non-public networks, in the mobile equipment, ME (which is a terminal user equipment without the USIM, because devices do not necessarily require a USIM for use in SNPNs).

In conventionally known mobile communication networks, i.e. in networks in compliance with the currently defined standards or standard documents, in such a primary network selection process, the highest priority regarding network selection is given to the home network or a plurality of home networks or to a plurality of networks in a list of so-called equivalent home PLMNs - EHPLMNs).

Regarding the selection of a mobile communication network by a user equipment or mobile station (network selection) the mobile station uses network selection data, typically lists of (mobile communication) networks prescribing an order of priority for network selection (or assigning a priority level to such networks in these lists); TS 23.122 (e.g. V18.0.0), for example, specifies - for public land mobile networks in clause 4.4, for standalone non-public networks in clause 4.9 - a number of lists stored in the mobile station (e.g. on a user equipment's USIM card) that determine the priority of network selection: The highest priority is given (after power-on of the device or loss of coverage), as already mentioned, to the home network (or home networks, if any, stored in a list of so-called equivalent home public land mobile networks - EHPLMNs); the next level of priority is given to the networks in a user list of preferred networks with access technology (UPLMNwAcT) in the order of the entries in these lists; and finally to the networks in an operator list with access technology (OPLMNwAcT); the specification of the access technology (or radio access technology) in these lists typically being optional. If none of the available networks is entered in one of these lists, the mobile station or user equipment searches for (mobile communication) networks with high signal level (high quality) and then among the remaining networks for the one with the highest signal level. A similar mechanism (i.e. based on using network selection data) has been defined for the network selection of SNPNs, whereby the mobile station or user equipment must be in SNPN access mode in order to be able to select a standalone non-public network. In this case, the lists can also be stored in the ME (mobile equipment, which is a terminal UE without the USIM), because devices do not necessarily require a USIM for use in standalone non-public networks. In addition to SNPN identities, Group IDs for Network selection (GINs) can also be used, which combine several SNPNs into one group. After the initial selection of a network (after power-on or after a return to coverage after the UE has lost the network) - and especially in case that the mobile station or user equipment is not connected to one from the group of highest priority networks (i.e. the home network(s) or the equivalent home PLMNs) - , depending on a timer setting on the USIM (or also in the ME for SNPN devices), higher priority networks (i.e. networks that are ranked higher on the lists) can be searched for periodically. However, with the exception of satellite networks, only networks from the same country (identified by the mobile country code, MCC) - as the country of the current network - are taken into account.

Typically, this network selection data, i.e. these lists for the home networks and the networks prioritized by the operator, are susceptible to be updated by the operator - typically the home operator of the mobile station or the operator operating the home mobile communication network - at any time via the mobile connection.

Likewise in conventionally known mobile communication networks, especially since the specification of 5G in 3GPP, mobile stations or user equipments might also be registered in two different networks (or might even be required to be registered in two different networks), i.e. in addition to the primary connection to the first mobile communication network, the mobile station is able to be connected to a second mobile communication network.

Especially release 16 of TS 22.261 defines "Multi-network connectivity and service delivery across operators" (clause 6.18 of TS 22.261 V16.16.0), e.g. especially industrial communication networks might only support a limited number of services (e.g., only data transmission, but no voice service). In order to offer the full service portfolio to users, cooperation is required with another network that provides the remaining services; a mobile station or a user equipment is then connected to the home network for basic services and simultaneously roams to another network to receive additional services. Other use cases might include (according to clause 6.41 of TS 22.261 V18.7.0) mobile stations or user equipments that connect to a local network (e.g. in a stadium in order to receive services from there, e.g. streaming of an ongoing sports broadcast, that are only available locally in this network) in addition to their existing connection to a (macro) network. In contrast to public networks (public land mobile networks, PLMNs), local networks can also be standalone non-public networks, SNPNs. Connection to the local network may only be allowed temporarily and when the mobile station or user equipment is in a specific location. Authentication in the local network might be based on the access data from the home network (roaming) or using the local network's own access data. Furthermore, having a secondary connection in addition to the primary connection could provide the possibility, regarding a mobile station, to split and/or switch back and forth the data stream of such a mobile station (if connected via two networks) between the two networks to provide optimal coverage. As a typical application, parallel connection over a terrestrial cellular network and over a satellite cellular network is considered, cf. FS_DualSteer study (TR 22.841 in draft status).

Such a secondary connection to the second telecommunications network of the mobile station also needs to be selected among the mobile communication networks available to the mobile station (at its current location and the considered point in time). According to the present invention, and as already stated, the network selection of the secondary connection (to the second mobile communication network), i.e. the secondary network selection process, is influenced by the result of the primary network selection process (based on the network selection data), i.e. the secondary network selection data are related, at least in part, to the first mobile communication network and indicating at least the second mobile communication network (that is the result of the secondary network selection process); especially the 'choice' within secondary network selection process might be reduced and/or the priority levels modified with regard to the primary network selection process. According to the present invention, it is furthermore advantageous that - in case that the primary connection is interrupted or terminated - the connection of the mobile station, via the secondary connection, to the second mobile communication network is maintained, leading to a higher level of service continuity and/or of quality-of-service.

According to the present invention the network selection data comprise lists or list entries as primary network selection data regarding the primary connection of the mobile station, the primary network selection data being used, by the mobile station, during the primary network selection process that is performed taking into account the radio environment, especially by means of the mobile station conducting measurements of radiofrequency parameters, the primary network selection process resulting in the mobile station being connected to, or registered on, the first mobile communication network,
wherein the secondary network selection data are also part of the network selection data, wherein specific parts of the secondary network selection data are assigned to the primary network selection data, each specific part corresponding to one of the mobile communication networks selectable as the first mobile communication network.

It is thereby advantageously possible according to the present invention that the lists or list entries that are used - as part of the network selection data - as primary network selection data (regarding the primary connection of the mobile station) are able to be complemented (or extended) by means of the secondary network selection data, wherein the secondary network selection data (also being part of the network selection data and/or assigned to the primary network selection data) provide an extension to the (primary) network selection data related to one of the mobile communication networks selectable as the first mobile communication network.

Hence especially, it is advantageously possible according to the present invention, to provide - by means of the secondary network selection data - an extension of the lists for network selection such that for each entry of the EHPLMN, UPLMNwAcT and/or OPLMNwAcT network lists (or their equivalents for SNPN network selection) one entry or multiple entries for prioritization of secondary networks (or groups of secondary networks) with access technology are possible. Especially, public land mobile network identities (i.e. PLMN IDs) as well as SNPN identities and group identities for network selection are able to be part of the secondary network selection data.

According to the present invention, it is advantageously furthermore possible and preferred that the primary network selection process either corresponds to a PLMN selection process, or to an SNPN selection process, and wherein the secondary network selection process either corresponds to a further PLMN selection process, or to a further SNPN selection process, wherein especially the mobile station either corresponds to a user equipment having or comprising a subscriber identity module or a USIM or a universal integrated circuit card, or to a mobile equipment (especially without a USIM).

It is thereby advantageously possible that the secondary connection (of the mobile station) is to a standalone non-public network (i.e. the second mobile communication network being a standalone non-public network) while the primary connection (of the mobile station) is to a public land mobile network (i.e. the first mobile communication network is a public land mobile network), or vice versa. This also means that the mobile station is able to be connected to a standalone non-public network (as the second mobile communication network) while not being in SNPN access mode (as it is, as its primary connection, connected to a public land mobile network). Of course, this also applies the other way around, i.e. the mobile station is able to be connected to a public land mobile network (as the second mobile communication network) while being in SNPN access mode (as it is, as its primary connection, connected to a standalone non-public network).

According to the present invention, it is advantageously furthermore possible and preferred that the network selection data are stored on a subscriber identity module or a USIM or a universal integrated circuit card associated with the mobile station, the subscriber identity module or the USIM or the universal integrated circuit card especially corresponding to the memory module of the mobile station, or wherein the network selection data are stored on the mobile equipment,
wherein especially the network selection data - especially the primary network selection data regarding the primary connection of the mobile station and the secondary network selection data regarding the secondary connection of the mobile station - comprise lists or list entries, respectively, regarding different categories of mobile communication networks, especially
   -- equivalent home public land mobile networks or equivalent home standalone non-public networks, and/or
   -- user-defined public land mobile networks or user-defined standalone non-public networks, and/or
   -- operator-defined public land mobile networks or operator-defined standalone non-public networks,
   -- standalone non-public network group identities,
wherein especially such lists or list entries, respectively, comprise prioritization indications regarding different radio access technologies.

It is thereby advantageously possible to realize and implement the inventive method in a comparatively simple and efficient manner.

According to the present invention, it is furthermore advantageously possible and preferred that, during the third step, in case that the second mobile communication network is - as the first mobile communication network - also susceptible to be used as primary connection or as a possible result of the primary network selection process, the connection to the second mobile communication network is used as the primary connection of the mobile station, thereby applying a first mode of operation after the primary connection to the first mobile communication network being interrupted or terminated,
wherein especially, as a secondary connection of the mobile station, the mobile station is connected to, or registered on, a further second mobile communication network as a result of a secondary network selection process being performed taking into account the radio environment as well as the secondary network selection data, especially the specific part of the secondary network selection data corresponding to the second mobile communication network used as primary connection of the mobile station.

It is thereby advantageously possible - especially according to such a first mode of operation, used or applied after the primary connection to the first mobile communication network being interrupted or terminated (in the third step according to the inventive method) - that a smooth service continuation is possible for the mobile station:
Initially, both the primary connection to the first mobile communication network and the secondary connection to the second mobile communication network serve (or provide communication services to) the mobile station, and - after the primary connection to the first mobile communication network fails or interrupts or terminates (according to the third step of the inventive method), and, furthermore, in case that the second mobile communication network is, as the first mobile communication network, also susceptible to be used as primary connection or as a possible result of the primary network selection process - the hitherto secondary connection to the second mobile communication network takes over and, thereafter, serves as (or: is used as) primary connection (thereby, of course, maintaining the second mobile communication network being used for that primary connection) of the mobile station, and furthermore - as a replacement of the hitherto secondary connection (to the second mobile communication network) - the further second mobile communication network is used for the secondary connection of the mobile station. In this case, the further second mobile communication network is the result of the mobile station having performed the secondary network selection process, again taking into account the radio environment as well as the secondary network selection data, especially the specific part of the secondary network selection data corresponding to the second mobile communication network (that is now used as primary connection of the mobile station).

Hence, if the primary network is lost (after the mobile station having been connected via its primary and secondary connection) and the secondary connection (to the second mobile communication network) is still present, a search of the secondary network is performed in the list entries (of the lists for the currently used access data) for primary networks. Thus, a check is performed whether the second mobile communication network is actually susceptible to be used as primary connection, i.e. whether it is a possible result of the primary network selection process; this is verified in case that the second mobile communication network is found in the network selection data (or, rather, in the primary network selection data). If such an entry exists, the second mobile communication network assumes or realizes the primary connection for the mobile station and a new secondary network can be selected based on the associated list entry (i.e. by means of performing a secondary network selection procedure using the secondary network selection data related to the second mobile communication network, now serving a primary connection).

This advantageously enables uninterrupted handover ("make before break") across network boundaries. For a data connection that runs across both networks to the same endpoint, the advantage is that the anchor of the data connection changes with each network change. Thus, there are no problems with charging and regulatory requirements such as enabling lawful interception are also easy to manage.

According to the present invention, it is furthermore advantageously possible and preferred that, during the third step and after a primary time interval has elapsed subsequent to the primary connection being interrupted or terminated, the primary network selection process is performed as an initial network selection process to be applied at switch-on or at recovery from lack of coverage of the user equipment, thereby applying a second mode of operation after the primary connection to the first mobile communication network being interrupted or terminated,
wherein especially values regarding and/or defining the primary time interval are stored in the memory module of the mobile station and/or as part of the network selection data, wherein especially the secondary network selection process is performed periodically according to a timer implementing a periodic secondary time interval, wherein especially values regarding and/or defining the secondary time interval and/or the start of the timer are stored in the memory module of the mobile station and/or as part of the network selection data,
wherein especially the timer and/or the secondary time interval of the secondary network selection process is independent from when the primary network selection process is performed.

It is thereby advantageously possible - especially according to such a second mode of operation, used or applied after the primary connection to the first mobile communication network being interrupted or terminated (in the third step according to the inventive method) - that a smooth service continuation is possible for the mobile station: Initially, both the primary connection to the first mobile communication network and the secondary connection to the second mobile communication network serve (or provide communication services to) the mobile station, and - after the primary connection to the first mobile communication network fails or interrupts or terminates (according to the third step of the inventive method) - the primary network selection process is performed after the primary time interval has elapsed (subsequent to the primary connection being interrupted or terminated); the primary network selection process is performed as an initial network selection process to be applied at switch-on or at recovery from lack of coverage of the mobile station.

Hence, if the primary network is lost (after the mobile station having been connected via its primary and secondary connection), a new search is not performed immediately as long as the user equipment is still connected via the secondary connection (to the second mobile communication network) is still present, i.e., the secondary network is available and valid. For the primary network the primary network selection process is performed after the primary time interval; the secondary network selection process as well, especially based on the list entries for the original primary network.

Thus, under changing coverage conditions, a stable connection can be established over the networks without repeated network changes.

According to the present invention, it is furthermore advantageously possible and preferred that, during the third step, the secondary connection between the mobile station and the second mobile communication network is not maintained, thereby applying a third mode of operation after the primary connection to the first mobile communication network being interrupted or terminated.

It is thereby advantageously possible to realize and implement the inventive method in a comparatively simple and efficient manner, and especially to provide an alternative behavior or an alternative treatment of the connections of the mobile station compared to the first and second modes of operation.

Furthermore, it is advantageously possible and preferred according to the present invention that the specific part of the secondary network selection data that corresponds to the first mobile communication network - or, a specific part of the secondary network selection data that corresponds to a mobile communication network selectable as the first mobile communication network - comprises or corresponds to a set of information items, each information item corresponding to or referring to a mobile communication network selectable as the second mobile communication network, wherein regarding the set of information items of each specific part of the secondary network selection data one or a plurality of the following is able to be verified:
-- at least one information item, preferably each one of the information items, comprises an indication whether the first or the second mode of operation is to be applied or whether the first or second or third mode of operation is to be applied after the primary connection to the first mobile communication network being interrupted or terminated,
-- an information item refers to at least one mobile communication network selectable as the second mobile communication network, especially each information item refers to one mobile communication network selectable as the second mobile communication network,
-- an information item comprises an indication for authentication purposes in order to access the respective mobile communication network referred to, especially the indication for authentication purposes indicates whether to use local credential information or credential information of a home network of the mobile station, and especially the indication for authentication purposes comprises the credential information to be used to access the respective mobile communication network referred to,
-- an information item comprises a validity indication - especially besides the indication for authentication purposes -, wherein by means of the validity indication the validity of the information item is able to be restricted or allowed, especially with respect to time and/or with respect to the location of the mobile station, wherein especially
-- regarding a validity indication with respect to time, a specifically defined time interval, especially occurring only once or occurring repeatedly and/or periodically and/or at specific events,
-- regarding a validity indication with respect to the location of the mobile station, a granularity at the level of tracking areas of the first mobile communication network is applied, and/or
-- regarding a validity indication with respect to the location of the mobile station one or a plurality of geographical coordinates is/are indicated, especially with a radius or especially a polygon defined by a plurality of geographical coordinates,
-- regarding a plurality of validity indications, such validity indications are able to be linked by logical operators, thereby especially realizing combined validity indications with respect to both time and the location of the mobile station,
-- all information items are considered and are taken into consideration during the secondary network selection process, especially independently from a country indication or a mobile country code, especially of the first mobile communication network,
-- the set of information items is susceptible to be an empty set, in which case this results in an avoidance of a secondary network selection, especially no secondary network selection takes place.

It is thereby advantageously possible to realize and implement the inventive method in a comparatively simple and efficient manner. Especially, it is advantageously possible, according to the present invention, that an additional indicator per secondary network entry (i.e. the indication regarding which mode of operation to apply after connection loss of the primary connection) is introduced to determine the behavior of the mobile station and/or of the network selection.

Furthermore, it is advantageously possible and preferred according to the present invention that the mobile station connecting to, or registering on, the second mobile communication network is performed using authentication and/or using a credential information according to one or a plurality out of the following:
-- depending on an indication in the network selection data, the credential information of a home network of the mobile station are used,
-- depending on an indication in the network selection data, the credential information of the second mobile communication network are used,
-- the credential information to be used is already stored in the memory module of the mobile station, especially a subscriber identity module or universal integrated circuit card,
-- the credential information to be used is transmitted, by the first mobile communication network and/or by the second mobile communication network, to the mobile station,
-- an indication how to perform authentication is able to be explicit, especially as part of the secondary network selection data, or implicit, especially in case that credential information of the second mobile communication network are stored or in case that the second mobile communication network rejects an authentication attempt using credential information of the first mobile communication network and/or of the home network of the mobile station.

It is thereby advantageously possible to realize and implement the inventive method in a comparatively simple and efficient manner.

Furthermore, the present invention relates to a mobile station according to claim 9 and to a system or mobile communication network according to claim 10.

Additionally, the present invention relates to a program comprising a computer readable program code which, when executed on a computer and/or on a mobile station and/or on a network node of a mobile communication network, or in part on a mobile station and/or in part on network node of a mobile communication network, causes the computer and/or the mobile station and/or the network node of the mobile communication network to perform the inventive method.

Still additionally, the present invention relates to a computer-readable medium comprising instructions which when executed on a computer and/or on a mobile station and/or on a network node of a mobile communication network, or in part on a mobile station and/or in part on network node of a mobile communication network, causes the computer and/or the mobile station and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a mobile station in a radio environment comprising a plurality of radio cells of a plurality of mobile communication networks.
Figure 2 schematically illustrates the mobile station comprising network selection data, especially stored in a memory module of the mobile station, typically the USIM in case of the mobile station being a user equipment, or in another memory portion of the mobile equipment / mobile station.
Figures 3 and 4 schematically illustrate examples of the structure of the network selection data, comprising primary network selection data and secondary network selection data.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

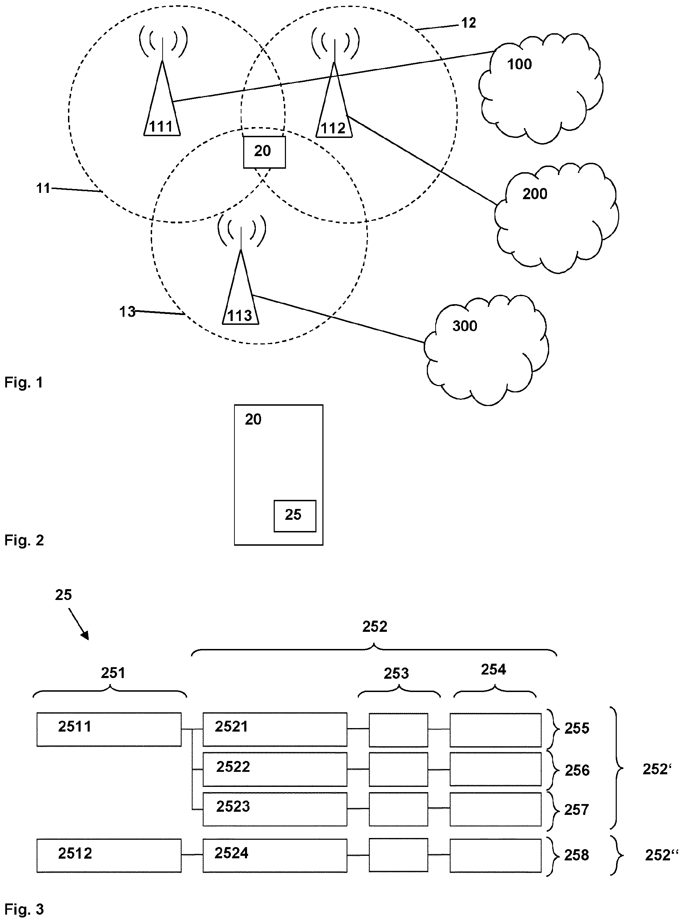

In Figure 1, a mobile station 20 is schematically shown in a radio environment comprising a plurality of radio cells of a plurality of mobile communication networks. In the exemplary representation of Figure 1, a first radio cell 11 is associated with or related to a first mobile communication network 100, a second radio cell 12 is associated with or related to a second mobile communication network 200, and a third radio cell 13 is associated with or related to a third mobile communication network 300.

Schematically, a base station entity is represented regarding each one of the three radio cells 11, 12, 13 that the mobile station 20 detects or "sees": A first base station entity 111 (typically but not necessarily of the first mobile communication network 100) generates or provides radio coverage of or regarding the first radio cell 11, a second base station entity 112 (typically but not necessarily of the second mobile communication network 200) generates or provides radio coverage of or regarding the second radio cell 12, and a third base station entity 113 (typically but not necessarily of the third mobile communication network 200) generates or provides radio coverage of or regarding the third radio cell 13.

In Figure 1, the mobile station 20 is shown being located within the radio coverage area (illustrated by means of dashed circles) of the first radio cell 11, the second radio cell 12, as well as the third radio cell 13. The mobile station 20 typically measures or detects reception conditions regarding the plurality of radio cells 11, 12, 13, and subsequently selects and/or registers to a mobile communication network out of the plurality of mobile communication networks 100, 200, 300.

According to the present invention, it is supposed that the mobile station 20 (especially a user equipment, i.e. comprising the mobile equipment with a USIM or subscriber identity module, or a mobile equipment) is already connected to a mobile communication network. This connection is called primary connection of the mobile station 20, and the respective mobile communication network is the first mobile communication network 100 (of the plurality of mobile communication networks 100, 200, 300 available to the mobile station). In addition to that primary connection to the first mobile communication network 100, the mobile station 20 is able to be connected to, or registered on, a second mobile communication network 200 (of the plurality of mobile communication networks 100, 200, 300). This possible connection, to the second mobile communication network 200, is also called secondary connection of the mobile station 20. The selection of the first mobile communication network 100 is the result of the primary network selection process (i.e. the initial network selection process that is performed - according to the respective standardization documents - in case that the mobile station 20 does not have any connection at all to a mobile communication network, i.e., typically, after power-on and/or after loss of connection) that is conducted based on network selection data 25 stored in the mobile station 20 (especially in the USIM in case the mobile station 20 is a user equipment, and, hence, comprises a USIM), i.e. at least part of the network selection data 25 relate to or indicate the first mobile communication network 100.

According to the present invention, in order for the mobile station 20 to be additionally connected to, or registered on, the second mobile communication network 200, the mobile station 20 comprises or receives secondary network selection data regarding the secondary connection of the mobile station 20 and regarding the second mobile communication network 200 (that the mobile station 20 is able to be connected to - in addition to being connected to, or registered on, the first mobile communication network 100 - as a result of a secondary network selection process) such that the secondary network selection data are related, at least in part, to the first mobile communication network 100 (and indicate at least the second mobile communication network 200).

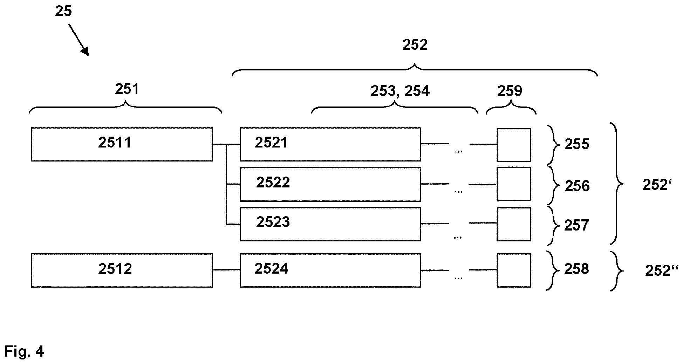

Different examples of the structure of the network selection data 25 - especially comprising the secondary network selection data 252 - are schematically shown in Figures 3 and 4. The network selection data 25 comprise, for both examples, the primary network selection data 251. The primary network selection data 251 are especially provided - according to respective standardization documents - in the form of lists of networks, e.g. the list of equivalent home public land mobile networks (EHPLMN), the user list of preferred networks with access technology (UPLMNwAcT) and/or the operator list with access technology (OPLMNwAcT), wherein by means of these lists, the different networks are ranked in an order of priority. This is schematically and exemplarily shown, in Figures 3 and 4, by means of the primary network selection data 251 being represented to comprise (at least as a part thereof) a list of networks (especially an arbitrary list of network, i.e. not specified whether this corresponds to a EHPLMN or a UPLMNwAct or a OPLMNwAcT list, or their equivalents for standalone non-public network selection), comprising a first primary network entry 2511 (e.g. relating to "PLMN A in France, E-UTRAN" in Figure 3, and to "PLMN A in France" in Figure 4) and a second primary network entry 2512 (e.g. relating to "PLMN X in UK" in Figure 3, and to "PLMN D in Spain" in Figure 4).

The secondary network selection data 252 preferably (but not necessarily) also comprise network entries; this is schematically and exemplarily shown, in Figure 3, by means of the secondary network selection data 252 comprising a first secondary network entry 2521 (e.g. relating to "PLMN B in France, NG-RAN" in Figure 3, and to "PLMN D in Spain" in Figure 4), a second secondary network entry 2522 (e.g. relating to "SNPN C" both in Figure 3 and 4), a third secondary network entry 2523 (e.g. relating to "PLMN D in Spain" in Figure 3, and to "PLMN B in France, sat NG-RAN" in Figure 4), and a fourth secondary network entry 2524 (e.g. relating to "SNPN Y, UTRAN" in Figure 3, and to "PLMN E in Portugal" in Figure 4).

Hence, the network selection data 25 especially comprises the primary network selection data 251 and the secondary network selection data 252, and especially as lists or list entries. Thereby, the primary network selection data 251 are used, as part of the network selection data 25, in the primary network selection process (i.e. regarding, or in order to set up, the primary connection of the mobile station 20) that is performed taking into account the radio environment, especially by means of the mobile station 20 conducting measurements of radiofrequency parameters. The primary network selection process results in the mobile station 20 being connected to, or registered on, the first mobile communication network 100.

As shown in Figures 3 and 4, the secondary network selection data 252 are also part of the network selection data 25, and, furthermore, the secondary network selection data 252 are shown to comprise specific parts 252', 252" (namely a first specific part 252' - comprising the first, second and third secondary network entry 2521, 2522, 2523 of the secondary network selection data 252 -, and a second specific part 252" - comprising the fourth secondary network entry 2524 of the secondary network selection data 252). The specific parts 252', 252" of the secondary network selection data 252 are assigned to the primary network selection data 251 such that each specific part 252', 252" is assigned to, or belongs to, a specific primary network entry 2511, 2512 as part of the primary network selection data 251, i.e. to mobile communication networks being selectable (in the primary network selection process) as the first mobile communication network 100.

In the examples represented in Figures 3 and 4, the first specific part 252' is assigned to or belongs to the first primary network entry 2511 of the primary network selection data 251, and the second specific part 252" is assigned to or belongs to the second primary network entry 2512 of the primary network selection data 251.

According to the present invention, it is preferred that the specific parts 252', 252" of the secondary network selection data 252 (that correspond to a mobile communication network selectable as the first mobile communication network 100) comprise or correspond to a set of information items 255, 256, 257, 258, each information item 255, 256, 257, 258 corresponding to or referring to a mobile communication network selectable as the second mobile communication network 200.

This is schematically and exemplarily shown, in Figures 3 and 4, by means of the first specific part 252' (of the secondary network selection data 252, the first specific part 252' corresponding to the first primary network entry 2511 of the primary network selection data 251) comprising a first information item 255, a second information item 256, and a third information item 257 as a set of information items, wherein each one of these information items 255, 256, 257 (of this set of information items) comprises or refers to one of the first, second and third network entries 2521, 2522, 2523 of the secondary network selection data 252, i.e. designating a mobile communication network selectable (in the secondary network selection process) as the second mobile communication network 200. Especially according to the present invention, the order of the information items 255, 256, 257 within a set of information items implies a priority rank among the information items, and, especially, the respective network entries; or the other way around, i.e. the order of the network entries implies a priority rank of the corresponding (secondary) networks, i.e. to be respected in the secondary network selection process. Analogously to the first specific part 252', the second specific part 252" (of the secondary network selection data 252, the second specific part 252" corresponding to the second primary network entry 2512 of the primary network selection data 251) comprises a fourth information item 258 (likewise as a set of (in this case only one) information item) comprising or referring to the fourth secondary network entry 2524 of the secondary network selection data 252, i.e. designating a mobile communication network selectable (in the secondary network selection process) as the second mobile communication network 200.

I.e. Figures 3 and 4 show that each one of the information items 255, 256, 257, 258 refers to at least one mobile communication network (or secondary network entry 2521, 2522, 2523, 2524) selectable as the second mobile communication network 200, especially each information item 255, 256, 257, 258 referring to one mobile communication network selectable as the second mobile communication network 200.

Figure 4 shows the possibility that each set of information items (i.e. the set of information items 255, 256, 257 regarding the first specific part 252', and the set consisting of information item 258 regarding the second specific part 252") - and potentially also each information item 255, 256, 257, 258 individually - comprises an indication 259 whether the first or the second mode of operation is to be applied or whether the first or second or third mode of operation is to be applied after the primary connection to the first mobile communication network 100 being interrupted or terminated. E.g. the indication 259 regarding which mode of operation to apply after connection loss of the primary connection might correspond to "first mode of operation" regarding the first and fourth information item 255, 258, to "second mode of operation" regarding the third information item 257, and to "third mode of operation" regarding the second information item 256.

Figure 3 furthermore shows the possibility that each set of information items (i.e. the set of information items 255, 256, 257 regarding the first specific part 252', and the set consisting of information item 258 regarding the second specific part 252") - and potentially also each information item 255, 256, 257, 258 individually - comprises an indication for authentication purposes 253 in order to access the respective mobile communication network referred to (in the corresponding secondary network entry, i.e. 2521 for information item 255, 2522 for information item 256, 2523 for information item 257, and 2524 for information item 258).

Especially, the indication for authentication purposes 253 indicates whether to use (in order to access the network indicated by the respective secondary network entry 2521, 2522, 2523, 2524) local credential information or credential information of a home network of the mobile station 20, and especially the indication for authentication purposes comprises the credential information to be used to access the respective mobile communication network referred to. E.g. the indication for authentication purposes 253 might correspond to "use home network authentication" and/or "the home network authentication parameters / credentials are the following (...)" regarding the first, third, and fourth information item 255, 257, 258, and to "use local network authentication" and/or "the local network authentication parameters / credentials are the following (...)" regarding the second information item 256.

Figure 3 furthermore also shows the possibility that each set of information items (i.e. the set of information items 255, 256, 257 regarding the first specific part 252', and the set consisting of information item 258 regarding the second specific part 252") - and potentially also each information item 255, 256, 257, 258 individually - comprises a validity indication 254 regarding the access to (or regarding the permission to access) the respective mobile communication network referred to (in the corresponding secondary network entry, i.e. 2521 for information item 255, 2522 for information item 256, 2523 for information item 257, and 2524 for information item 258). Especially, the validity indication 254 indicates conditions (e.g. regarding time and/or regarding location of the mobile station 20) that have to be fulfilled in order for the mobile station 20 having the permission access (or that - if fulfilled - exclude the mobile station 20 from accessing) the network indicated by the respective secondary network entry 2521, 2522, 2523, 2524. E.g. the validity indication 254 might be empty (i.e. refraining from stipulating a positive condition regarding either the permission to access the respective network, or, alternatively, regarding a denial to access the respective network) regarding the first, third, and fourth information item 255, 257, 258, and might correspond to "on Sundays and if located at a specific location or geographical area, e.g. a city such as Paris" regarding the second information item 256.

Hence preferably according to the present invention, by means of the validity indication 254, the validity (or applicability) of the information items 255, 256, 257, 258 is able to be restricted or allowed, especially with respect to time and/or with respect to the location of the mobile station 20, wherein especially
-- regarding a validity indication with respect to time, a specifically defined time interval, especially occurring only once or occurring repeatedly and/or periodically and/or at specific events,
-- regarding a validity indication with respect to the location of the mobile station 20, a granularity at the level of tracking areas of the first mobile communication network 100 is applied, and/or
-- regarding a validity indication with respect to the location of the mobile station 20 one or a plurality of geographical coordinates is/are indicated, especially with a radius or especially a polygon defined by a plurality of geographical coordinates,
-- regarding a plurality of validity indications, such validity indications are able to be linked by logical (e.g. Boolean) operators, thereby especially realizing combined validity indications with respect to both time and the location of the mobile station 20.

In contrast to Figure 3, in Figure 4, the indication for authentication purposes 253 and the validity indication 254 - i.e. the respective fields for access data and validity - are omitted (or only hinted at by means of reference signs 253, 254) for the sake of simplicity of representation.

It is furthermore preferred according to the present invention that - as a part of a considered set of information items corresponding to a specific part 252', 252" of the secondary network selection data 252 - all information items 255, 256, 257, 258 (of such a considered set of information items) are considered and are taken into consideration during the secondary network selection process, and this especially independently from a country indication or a mobile country code, especially of the first mobile communication network 100 (i.e. the network referred to by the corresponding primary network entry 2511, 2512). Furthermore, a set of information items 255, 256, 257, 258 (corresponding to a specific part 252', 252" of the secondary network selection data 252) is susceptible to be an empty set, in which case this results in an avoidance of a secondary network selection, especially no secondary network selection takes place.

Furthermore, it is preferred according to the present invention that the secondary network selection process is performed directly after the mobile station 20 is connected to, or registered on, the first mobile communication network 100, and/or periodically according to a timer implementing a periodic secondary time interval, wherein especially values regarding the secondary time interval and/or the start of the timer being stored in the memory module of the mobile station 20. Such a timer and/or a secondary time interval of the secondary network selection process is especially independent from when a primary network selection process is repeated.

According to further variants of the present invention, connecting to, or registering on, the second mobile communication network 200 is performed, by the mobile station 20, using authentication and/or using a credential information according to one or a plurality out of the following:
-- depending on an indication in the network selection data 25, the credential information of a home network of the mobile station 20 are used,
-- depending on an indication in the network selection data 25, the credential information of the second mobile communication network 200 are used,
-- the credential information to be used is already stored in the memory module of the mobile station 20, especially a subscriber identity module or universal integrated circuit card,
-- the credential information to be used is transmitted, by the first mobile communication network 100 and/or by the second mobile communication network 200, to the mobile station 20,
-- an indication how to perform authentication is able to be explicit, especially as part of the secondary network selection data 252, or implicit, especially in case that credential information of the second mobile communication network 200 are stored or in case that the second mobile communication network 200 rejects an authentication attempt using credential information of the first mobile communication network 100 and/or of the home network of the mobile station 20.

Additionally, the present invention provides solution in case that the connection with the first mobile communication network 100 (as the primary connection of the mobile station 20) is terminated: In such a case (i.e. assuming that the mobile station 20 has previously been connected to the first mobile communication network 100 as its primary connection and to the second mobile communication network 200 as its secondary connection, and that - for some reason - the primary connection to the first mobile communication network 100 is terminated (i.e. the secondary connection to the second mobile communication network 200 is still active or available): If, in such a situation, the mobile station 20 (by means of performing the primary network selection process again) is connected to, or registered on, a further first mobile communication network (i.e. a network different from the first mobile communication network 100 to which previously the primary connection had been established) - as a result of the subsequent primary network selection process after terminating the connection with the first mobile communication network 100 as the primary connection of the mobile station 20 -, a further secondary network selection process is performed regarding the secondary connection of the mobile station 20, taking into account the radio environment as well as the respective part of the secondary network selection data 252 corresponding to the further first mobile communication network (i.e. typically a different specific part of the secondary network selection data 252 and, correspondingly, a different set of information items is used); furthermore in such a situation, especially the connection to the second mobile communication network 200, or the secondary connection of the mobile station 20, is terminated after terminating the primary connection with the first mobile communication network 100 and prior to the mobile station 20 being connected to, or registered on, the further first mobile communication network.

Hence, according to the present invention, a mobile station 20 - in order to implement the present invention and the method according to the present invention - basically only needs to receive the network selection data 25 (typically from its home network) and/or needs to store the network selection data 25 that are structured according to the present invention, i.e. the secondary network selection data 252 having a relation, at least in part, to the first mobile communication network 100 (to which the mobile station 20 is connected - as its primary connection - due to having performed the primary network selection process) and indicating at least the second mobile communication network 200.

Thus, according to such an understanding of the present invention the mobile station 20 only needs to be configured to use the network selection data 25, at least in part related to or indicating a first mobile communication network 100, to conduct a primary network selection process in order to be, as a primary connection of the mobile station 20, connected to, or to be registered on, the first mobile communication network 100, wherein the network selection data 25 additionally comprises the secondary network selection data 252, the secondary network selection data 252 being related, at least in part, to the first mobile communication network 100 and indicating at least a second mobile communication network 200, and wherein the mobile station 20 is configured such as to use the secondary network selection data 252 to conduct a secondary network selection process in order to be, as a secondary connection of the mobile station 20, connected to, or to be registered on, the second mobile communication network 200 - in addition to being connected to, or registered on, the first mobile communication network 100.

Hence, according to the present invention, the secondary network selection data 252 especially correspond to an extension of the lists for network selection such that for each entry of the EHPLMN, UPLMNwAcT and/or OPLMNwAcT (or their equivalents for SNPN network selection) multiple entries for prioritization of secondary networks (or groups of secondary networks) - potentially with access technology - are possible. PLMN Identities as well as SNPN Identities and Group Identities for Network selection can be entered there, i.e. as part of the secondary network selection data 252.

If there are - regarding (or related to) the primary network (i.e. the first telecommunications network 100) in which the user equipment (or mobile station) is currently logged on - entries (as part of the secondary network selection data 252) for one or more secondary networks, then the user equipment (or mobile station) 20 searches for these (secondary) networks and also logs on to the highest priority network thereof. The search for these (secondary) networks is performed, e.g., immediately after logging into a new primary network or periodically according to a timer value on the USIM (or also in the ME for SNPN devices). This timer is especially independent of the timer for the periodic search in the primary network.

Especially - and unlike network selection for primary networks -, all entries for secondary networks are considered, regardless of the country.

Furthermore especially, if there is no entry for secondary networks for a primary network (i.e. an empty set of information items), no search for secondary networks is performed, i.e. no secondary connection is attempted by the mobile station 20.

For authentication in the selected secondary network, the user equipment or mobile station 20 uses, depending on the indication, either the access data (credentials) from the home network or access data from the secondary network, which may already be stored on the USIM or in the terminal device or may only be played on the device in the course of the access attempt. The indication could be explicit - an information element in the list indicating which credentials to use -, or implicit if secondary network credentials are stored or the secondary network rejects access with home network credentials.

Alternatively or cumulatively according to the present invention, if a new primary network is selected (because the coverage to the original primary network was lost or because a higher priority network was found during the periodic scan), the secondary network is also selected again.

Alternatively or cumulatively according to the present invention, if the secondary network is lost, a new search for it is performed based on the entries in the lists. The connection to the primary network remains unaffected.

Furthermore alternatively or cumulatively according to the present invention, according to the present invention, the extended lists (i.e. the lists of network selection data 25 extended by means of the secondary network selection data 252) should also be able to contain entries for the validity of the selection of secondary networks, e.g. a time restriction (start date+time, end date+time; periodic validity - valid on a certain day of the week / day of the month / day of the year at a certain time within a certain period), or a restriction of the location (only valid if the user equipment or the mobile station 20 is in, e.g., a certain tracking area of the primary network, or in a certain area specified by coordinates). The validity specifications are logically linked (AND, OR, NOT) with each other (e.g. valid if temporal AND local condition is met). The validity specifications trigger a search for the secondary network.

In the following, an application example (e.g. the connection to a local network in a stadium) is provided with reference to Figure 3 (but with the difference, that the first secondary network entry 2521 rather relates to "SNPN B, e.g., in France, NG-RAN"):
A soccer stadium is served by a SNPN B designed to be available only in the stands of the stadium. The stadium network streams video from different camera perspectives (goalie view, coach view, etc.) during matches, as well as replays of key events. This content is only available via SNPN B.

The operator of PLMN A has an agreement with SNPN B that user equipment or mobile stations 20 from PLMN A can roam to SNPN B during prime time daily between 1800 and 2200 hours to watch the local content.

Operator A updates the EHPLMN list (with respect to the secondary network selection data 252) of its customers: Primary network is PLMN A, secondary network SNPN B, access data (i.e. the indication for authentication purposes 253) is that of PLMN A, validity (i.e. the validity indication 254) is restricted to daily between 1800 and 2200 hours in the tracking area where the stadium is located. The timer for secondary networks is set to 10 min.

A user equipment or mobile station 20 that is not in the area of the stadium is logged into the home network PLMN A (as its primary connection or first mobile communication network 100), but does not periodically search for another network because the validity (being located in the stadium) is not given for the only entry of a secondary network.

Thus, there is no negative impact on the battery life of such a user equipment or mobile station 20 outside of the stadium because there are no additional network searches. The same applies to a user equipment or mobile station 20 in the stadium area but outside of the validity period.

If the user equipment or mobile station 20 enters the tracking area of the stadium during the validity period, a search for the secondary network is started. If the user equipment or mobile station 20 detects the secondary network SNPN B, it additionally tries to register there.

This ensures that the user equipment or mobile station 20 selects the additional network (as its secondary connection or second mobile communication network 200) for receiving the streaming content without any further user interaction, but the search only takes place when it makes sense and thus does not consume energy unnecessarily.

In the following, application examples are provided with reference to Figure 4 (exemplarily showing a representation of a OPLMNwAcT list that is extended (by means of the secondary network selection data 252) according to the present invention):
Firstly, a simultaneous connection via terrestrial and satellite network is considered:
A user equipment 20 from a PLMN X (e.g. in Germany) is configured with the above mentioned (exemplary) OPLMNwAcT list. When the user equipment 20 travels from Germany to France, PLMN A in France is selected based on the primary list entry (reference sign 2511 in Figure 4). PLMN D in Spain (reference sign 2512 in Figure 4) cannot be received at this point, nor SNPN C (reference sign 2522 in Figure 4). But PLMN B with satellite access (reference sign 2523 in Figure 4) is available as a secondary network (i.e. as the secondary connection of the user equipment 20). Thus, the user equipment 20 additionally (to PLMN A in France, 2511) connects to PLMN B via satellite NG-RAN.

If the user equipment 20 now moves outside the coverage area of PLMN A, it remains connected to PLMN B via satellite NG-RAN because it operates with this secondary network (i.e. with this secondary connection) in mode 2 (the indication 259, in Figure 4, regarding which mode of operation to apply after connection loss of the primary connection exemplarily corresponds to "first mode of operation" regarding the first and fourth information items 255, 258, to "second mode of operation" regarding the third information item 257 (i.e. regarding PLMN B via satellite NG-RAN), and to "third mode of operation" regarding the second information item 256).

Reachability and data transmission are ensured. When PLMN A is available again, it is found again during the next periodic search (i.e. performing the primary network selection process) and the user equipment 20 reconnects to it as a primary network. If the connection via satellite fails, the user equipment 20 can still be reached via the PLMN A terrestrial network.

Hence, a stable connection over two networks is provided, where data streams can be switched back and forth between the two networks if required, or data can be split over both networks.

Secondly, an uninterrupted connection across country and network borders is considered:
If the user equipment 20 of the first example (i.e. roaming in France) approaches the border to Spain, PLMN D (reference sign 2512 in Figure 4) is available in Spain and the user equipment 20 chooses this network as its secondary network (i.e. secondary connection) because it has higher priority than PLMN B. If the user equipment 20 moves further into the interior of Spain, it loses the connection to PLMN A in France. Due to mode 1 for PLMN D (i.e. the indication 259, in Figure 4, regarding which mode of operation to apply after connection loss of the primary connection exemplarily corresponds to "first mode of operation" regarding the first and fourth information items 255, 258), it is now searched if there is a list entry for PLMN D at the primary networks (i.e. as part of the primary network selection data 251), which is the case and PLMN D becomes the primary network. The associated secondary network entry is PLMN E in Portugal (reference sign 2524 in Figure 4) and this is selected as an additional network in case that the user equipment 20, at the border with Portugal, can receive it.

Hence, this example shows that the present invention allows for, e.g., the user equipment 20 to keep a permanent connection to, e.g., a V2X application server. First the connection is made via PLMN A, then via PLMN A and PLMN D, then via PLMN D and so on. At each change, a new data session can be established to the server and it is not necessary to redirect an existing session, which is a significant simplification for charging and regulatory services.

## Claims

1. Method for operating a mobile station (20) being in a radio environment comprising a plurality of radio cells (11, 12, 13) of a plurality of mobile communication networks (100, 200, 300), each one of these radio cells (11, 12, 13) being associated, respectively, to at least one mobile communication network of the plurality of mobile communication networks (100, 200, 300),
wherein, as a primary connection of the mobile station (20), the mobile station (20) is connected to, or registered on, a first mobile communication network (100) of the plurality of mobile communication networks (100, 200, 300) and is, additionally and as a secondary connection of the mobile station (20), able to be connected to, or registered on, a second mobile communication network (200) of the plurality of mobile communication networks (100, 200, 300),
wherein the mobile station (20) is connected to, or registered on, the first mobile communication network (100) as a result of a primary network selection process that is performed taking into account the radio environment as well as network selection data (25) being stored in a memory module of the mobile station (20), wherein at least part of the network selection data (25) relate to or indicate the first mobile communication network (100), wherein the network selection data (25) comprise lists or list entries as primary network selection data (251) regarding the primary connection of the mobile station (20), the primary network selection data (251) being used, by the mobile station (20), during the primary network selection process, the primary network selection process resulting in the mobile station (20) being connected to, or registered on, the first mobile communication network (100),
wherein, in order for the mobile station (20) to be additionally connected to, or registered on, the second mobile communication network (200), the method comprises the following steps:
-- in a first step, the mobile station (20) comprises or receives secondary network selection data (252) regarding the secondary connection of the mobile station (20), the secondary network selection data (252) being related, at least in part, to the first mobile communication network (100) and indicating at least the second mobile communication network (200), wherein the secondary network selection data (252) are also part of the network selection data (25), wherein specific parts (252', 252") of the secondary network selection data (252) are assigned to the primary network selection data (251) with each specific part (252', 252") corresponding to one of the mobile communication networks selectable as the first mobile communication network (100),
-- in a second step, the mobile station (20) is connected to, or registered on, the second mobile communication network (200) - in addition to being connected to, or registered on, the first mobile communication network (100) - as a result of a secondary network selection process being performed taking into account the radio environment as well as the specific part (252', 252") of the secondary network selection data (252) that corresponds to the first mobile communication network (100),
-- in a third step, and in case that the primary connection to the first mobile communication network (100) is interrupted or terminated while the secondary connection to the second mobile communication network (200) is still active or available, the secondary connection between the mobile station (20) and the second mobile communication network (200) is maintained.

2. Method according to claim 1, wherein the primary network selection process either corresponds to a PLMN selection process, or to an SNPN selection process, and wherein the secondary network selection process either corresponds to a further PLMN selection process, or to a further SNPN selection process, wherein especially the mobile station (20) either corresponds to a user equipment having or comprising a subscriber identity module or a universal integrated circuit card, or to a mobile equipment.

3. Method according to one of the preceding claims, wherein the network selection data (25) are stored on a subscriber identity module or a universal integrated circuit card associated with the mobile station (20), the subscriber identity module or the universal integrated circuit card especially corresponding to the memory module of the mobile station (20), or wherein the network selection data (25) are stored on the mobile equipment,
wherein especially the network selection data (25) - especially the primary network selection data (251) regarding the primary connection of the mobile station (20) and the secondary network selection data (252) regarding the secondary connection of the mobile station (20) - comprise lists or list entries, respectively, regarding different categories of mobile communication networks, especially
-- equivalent home public land mobile networks or equivalent home standalone non-public networks, and/or
-- user-defined public land mobile networks or user-defined standalone non-public networks, and/or
-- operator-defined public land mobile networks or operator-defined standalone non-public networks,
-- standalone non-public network group identities,
wherein especially such lists or list entries, respectively, comprise prioritization indications regarding different radio access technologies.

4. Method according to one of the preceding claims, wherein, during the third step, in case that the second mobile communication network (200) is - as the first mobile communication network (100) - also susceptible to be used as primary connection or as a possible result of the primary network selection process, the connection to the second mobile communication network (200) is used as the primary connection of the mobile station (20), thereby applying a first mode of operation after the primary connection to the first mobile communication network (100) being interrupted or terminated,
wherein especially, as a secondary connection of the mobile station (20), the mobile station (20) is connected to, or registered on, a further second mobile communication network (200) as a result of a secondary network selection process being performed taking into account the radio environment as well as the secondary network selection data (252), especially the specific part (252', 252") of the secondary network selection data (252) corresponding to the second mobile communication network (200) used as primary connection of the mobile station (20).

5. Method according to one of the preceding claims, wherein, during the third step and after a primary time interval has elapsed subsequent to the primary connection being interrupted or terminated, the primary network selection process is performed as an initial network selection process to be applied at switch-on or at recovery from lack of coverage of the user equipment (20), thereby applying a second mode of operation after the primary connection to the first mobile communication network (100) being interrupted or terminated,
wherein especially values regarding and/or defining the primary time interval are stored in the memory module of the mobile station (20) and/or as part of the network selection data (25),
wherein especially the secondary network selection process is performed periodically according to a timer implementing a periodic secondary time interval,
wherein especially values regarding and/or defining the secondary time interval and/or the start of the timer are stored in the memory module of the mobile station (20) and/or as part of the network selection data (25),
wherein especially the timer and/or the secondary time interval of the secondary network selection process is independent from when the primary network selection process is performed.

6. Method according to one of the preceding claims, wherein, during the third step, the secondary connection between the mobile station (20) and the second mobile communication network (200) is not maintained, thereby applying a third mode of operation after the primary connection to the first mobile communication network (100) being interrupted or terminated.

7. Method according to one of the preceding claims, wherein the specific part (252', 252") of the secondary network selection data (252) that corresponds to the first mobile communication network (100) - or, a specific part (252', 252") of the secondary network selection data (252) that corresponds to a mobile communication network selectable as the first mobile communication network (100) - comprises or corresponds to a set of information items (255, 256, 257, 258), each information item (255, 256, 257, 258) corresponding to or referring to a mobile communication network selectable as the second mobile communication network (200),
wherein regarding the set of information items (255, 256, 257, 258) of each specific part (252', 252") of the secondary network selection data (252) one or a plurality of the following is able to be verified:
-- at least one information item (255, 256, 257, 258), preferably each one of the information items (255, 256, 257, 258), comprises an indication whether the first or the second mode of operation is to be applied or whether the first or second or third mode of operation is to be applied after the primary connection to the first mobile communication network (100) being interrupted or terminated,
-- an information item (255, 256, 257, 258) refers to at least one mobile communication network selectable as the second mobile communication network (200), especially each information item (255, 256, 257, 258) refers to one mobile communication network selectable as the second mobile communication network (200),
-- an information item (255, 256, 257, 258) comprises an indication for authentication purposes (253) in order to access the respective mobile communication network referred to, especially the indication for authentication purposes (253) indicates whether to use local credential information or credential information of a home network of the mobile station (20), and especially the indication for authentication purposes (253) comprises the credential information to be used to access the respective mobile communication network referred to,
-- an information item (255, 256, 257, 258) comprises a validity indication (254) - especially besides the indication for authentication purposes (253) -, wherein by means of the validity indication (254) the validity of the information item (255, 256, 257, 258) is able to be restricted or allowed, especially with respect to time and/or with respect to the location of the mobile station (20), wherein especially
-- regarding a validity indication with respect to time, a specifically defined time interval, especially occurring only once or occurring repeatedly and/or periodically and/or at specific events,
-- regarding a validity indication with respect to the location of the mobile station (20), a granularity at the level of tracking areas of the first mobile communication network (100) is applied, and/or
-- regarding a validity indication with respect to the location of the mobile station (20) one or a plurality of geographical coordinates is/are indicated, especially with a radius or especially a polygon defined by a plurality of geographical coordinates,
-- regarding a plurality of validity indications, such validity indications are able to be linked by logical operators, thereby especially realizing combined validity indications with respect to both time and the location of the mobile station (20),
-- all information items (255, 256, 257, 258) are considered and are taken into consideration during the secondary network selection process, especially independently from a country indication or a mobile country code, especially of the first mobile communication network (100),
-- the set of information items (255, 256, 257, 258) is susceptible to be an empty set, in which case this results in an avoidance of a secondary network selection, especially no secondary network selection takes place.

8. Method according to one of the preceding claims, wherein connecting to, or registering on, the second mobile communication network (200) is performed, by the mobile station (20), using authentication and/or using a credential information according to one or a plurality out of the following:
-- depending on an indication in the network selection data (25), the credential information of the first mobile communication network (100) and/or of a home network of the mobile station (20) are used,
-- depending on an indication in the network selection data (25), the credential information of a home network of the mobile station (20) and/or of the second mobile communication network (200) are used,
-- the credential information to be used is already stored in the memory module of the mobile station (20), especially a subscriber identity module or universal integrated circuit card,
-- the credential information to be used is transmitted, by the first mobile communication network (100) and/or by the second mobile communication network (200), to the mobile station (20),
-- an indication how to perform authentication is able to be explicit, especially as part of the secondary network selection data (252), or implicit, especially in case that credential information of the second mobile communication network (200) are stored or in case that the second mobile communication network (200) rejects an authentication attempt using credential information of the first mobile communication network (100) and/or of the home network of the mobile station (20).

9. Mobile station (20) for being operated in a radio environment comprising a plurality of radio cells (11, 12, 13) of a plurality of mobile communication networks (100, 200, 300), each one of these radio cells (11, 12, 13) being associated, respectively, to at least one mobile communication network of the plurality of mobile communication networks (100, 200, 300),
wherein, as a primary connection of the mobile station (20), the mobile station (20) is connected to, or registered on, a first mobile communication network (100) of the plurality of mobile communication networks (100, 200, 300) and is, additionally and as a secondary connection of the mobile station (20), able to be connected to, or registered on, a second mobile communication network (200) of the plurality of mobile communication networks (100, 200, 300),
wherein the mobile station (20) is connected to, or registered on, the first mobile communication network (100) as a result of a primary network selection process that is performed taking into account the radio environment as well as network selection data (25) being stored in a memory module of the mobile station (20), wherein at least part of the network selection data (25) relate to or indicate the first mobile communication network (100), wherein the network selection data (25) comprise lists or list entries as primary network selection data (251) regarding the primary connection of the mobile station (20), the primary network selection data (251) being used, by the mobile station (20), during the primary network selection process, the primary network selection process resulting in the mobile station (20) being connected to, or registered on, the first mobile communication network (100),
wherein, in order for the mobile station (20) to be additionally connected to, or registered on, the second mobile communication network (200), the mobile station (20) is configured such that:
-- the mobile station (20) comprises or receives secondary network selection data (252) regarding the secondary connection of the mobile station (20), the secondary network selection data (252) being related, at least in part, to the first mobile communication network (100) and indicating at least the second mobile communication network (200), wherein the secondary network selection data (252) are also part of the network selection data (25), wherein specific parts (252', 252") of the secondary network selection data (252) are assigned to the primary network selection data (251) with each specific part (252', 252") corresponding to one of the mobile communication networks selectable as the first mobile communication network (100),
-- the mobile station (20) is connected to, or registered on, the second mobile communication network (200) - in addition to being connected to, or registered on, the first mobile communication network (100) - as a result of a secondary network selection process being performed taking into account the radio environment as well as the specific part (252', 252") of the secondary network selection data (252) that corresponds to the first mobile communication network (100),
-- in case that the primary connection to the first mobile communication network (100) is interrupted or terminated while the secondary connection to the second mobile communication network (200) is still active or available, the secondary connection between the mobile station (20) and the second mobile communication network (200) is maintained.

10. System or mobile communication network (100, 200) for operating a mobile station (20) being in a radio environment comprising a plurality of radio cells (11, 12, 13) of a plurality of mobile communication networks (100, 200, 300), each one of these radio cells (11, 12, 13) being associated, respectively, to at least one mobile communication network of the plurality of mobile communication networks (100, 200, 300),
wherein, as a primary connection of the mobile station (20), the mobile station (20) is connected to, or registered on, a first mobile communication network (100) of the plurality of mobile communication networks (100, 200, 300) and is, additionally and as a secondary connection of the mobile station (20), able to be connected to, or registered on, a second mobile communication network (200) of the plurality of mobile communication networks (100, 200, 300),
wherein the mobile station (20) is connected to, or registered on, the first mobile communication network (100) as a result of a primary network selection process that is performed taking into account the radio environment as well as network selection data (25) being stored in a memory module of the mobile station (20), wherein at least part of the network selection data (25) relate to or indicate the first mobile communication network (100), wherein the network selection data (25) comprise lists or list entries as primary network selection data (251) regarding the primary connection of the mobile station (20), the primary network selection data (251) being used, by the mobile station (20), during the primary network selection process, the primary network selection process resulting in the mobile station (20) being connected to, or registered on, the first mobile communication network (100),
wherein, in order for the mobile station (20) to be additionally connected to, or registered on, the second mobile communication network (200), the system or mobile communication network (100, 200) is configured such that:
-- the mobile station (20) comprises or receives secondary network selection data (252) regarding the secondary connection of the mobile station (20), the secondary network selection data (252) being related, at least in part, to the first mobile communication network (100) and indicating at least the second mobile communication network (200), wherein the secondary network selection data (252) are also part of the network selection data (25), wherein specific parts (252', 252") of the secondary network selection data (252) are assigned to the primary network selection data (251) with each specific part (252', 252") corresponding to one of the mobile communication networks selectable as the first mobile communication network (100),
-- the mobile station (20) is connected to, or registered on, the second mobile communication network (200) - in addition to being connected to, or registered on, the first mobile communication network (100) - as a result of a secondary network selection process being performed taking into account the radio environment as well as the specific part (252', 252") of the secondary network selection data (252) that corresponds to the first mobile communication network (100),
-- in case that the primary connection to the first mobile communication network (100) is interrupted or terminated while the secondary connection to the second mobile communication network (200) is still active or available, the secondary connection between the mobile station (20) and the second mobile communication network (200) is maintained.

11. Program comprising a computer readable program code, which, when executed on a computer and/or on a mobile station (20) and/or on a network node of a mobile communication network (100), or in part on a mobile station (20) and/or in part on network node of a mobile communication network (100), causes the computer and/or the mobile station (20) and/or the network node of the mobile communication network (100) to perform a method according one of claims 1 to 8.

12. Computer-readable medium comprising instructions which when executed on a computer and/or on a mobile station (20) and/or on a network node of a mobile communication network (100), or in part on a mobile station (20) and/or in part on network node of a mobile communication network (100), causes the computer and/or the mobile station (20) and/or the network node of the mobile communication network (100) to perform a method according one of claims 1 to 8.

## Patentansprüche

1. Verfahren zum Betreiben einer Mobilstation (20), die sich in einer Funkumgebung befindet, die mehrere Funkzellen (11, 12, 13) von mehreren Mobilkommunikationsnetzen (100, 200, 300) umfasst, wobei jede dieser Funkzellen (11, 12, 13) jeweils mit mindestens einem Mobilkommunikationsnetz der mehreren Mobilkommunikationsnetze (100, 200, 300) verknüpft wird,
wobei, als eine primäre Verbindung der Mobilstation (20), die Mobilstation (20) mit einem ersten Mobilkommunikationsnetz (100) der mehreren Mobilkommunikationsnetze (100, 200, 300) verbunden oder bei diesem registriert wird und, zusätzlich und als eine sekundäre Verbindung der Mobilstation (20), mit einem zweiten Mobilkommunikationsnetz (200) der mehreren Mobilkommunikationsnetze (100, 200, 300) verbunden oder bei diesem registriert werden kann,
wobei die Mobilstation (20) als ein Ergebnis eines Primärnetz-Auswahlprozesses, der unter Berücksichtigung der Funkumgebung sowie von Netzauswahldaten (25), die in einem Speichermodul der Mobilstation (20) gespeichert sind, durchgeführt wird, mit dem ersten Mobilkommunikationsnetz (100) verbunden oder bei diesem registriert ist, wobei sich mindestens ein Teil der Netzauswahldaten (25) auf das erste Mobilkommunikationsnetz (100) bezieht oder dieses angibt, wobei die Netzauswahldaten (25) Listen oder Listeneinträge als Primärnetz-Auswahldaten (251) bezüglich der primären Verbindung der Mobilstation (20) umfassen, wobei die Primärnetz-Auswahldaten (251) durch die Mobilstation (20) während des Primärnetz-Auswahlprozesses verwendet werden, wobei der Primärnetz-Auswahlprozess dazu führt, dass die Mobilstation (20) mit dem ersten Mobilkommunikationsnetz (100) verbunden oder bei diesem registriert ist,
wobei, damit die Mobilstation (20) zusätzlich mit dem zweiten Mobilkommunikationsnetz (200) verbunden oder bei diesem registriert werden kann, das Verfahren die folgenden Schritte umfasst:
- in einem ersten Schritt umfasst oder empfängt die Mobilstation (20) Sekundärnetz-Auswahldaten (252) bezüglich der sekundären Verbindung der Mobilstation (20), wobei sich die Sekundärnetz-Auswahldaten (252) mindestens teilweise auf das erste Mobilkommunikationsnetz (100) beziehen und mindestens das zweite Mobilkommunikationsnetz (200) angeben, wobei die Sekundärnetz-Auswahldaten (252) außerdem Teil der Netzauswahldaten (25) sind, wobei spezifische Teile (252', 252") der Sekundärnetz-Auswahldaten (252) den Primärnetz-Auswahldaten (251) zugewiesen werden, wobei jeder spezifische Teil (252', 252") einem der Mobilkommunikationsnetze entspricht, das als das erste Mobilkommunikationsnetz (100) auswählbar ist,
- in einem zweiten Schritt ist die Mobilstation (20) als ein Ergebnis eines Sekundärnetz-Auswahlprozesses, der unter Berücksichtigung der Funkumgebung sowie des spezifischen Teils (252', 252") der Sekundärnetz-Auswahldaten (252), der dem ersten Mobilkommunikationsnetz (100) entspricht, durchgeführt wird, zusätzlich zum Verbinden mit, oder Registrieren bei, dem ersten Mobilkommunikationsnetz (100) mit dem zweiten Mobilkommunikationsnetz (200) verbunden oder bei diesem registriert.
- in einem dritten Schritt, und in dem Fall, dass die primäre Verbindung mit dem ersten Mobilkommunikationsnetz (100) unterbrochen oder beendet wird, während die sekundäre Verbindung mit dem zweiten Mobilkommunikationsnetz (200) noch aktiv oder verfügbar ist, wird die sekundäre Verbindung zwischen der Mobilstation (20) und dem zweiten Mobilkommunikationsnetz (200) aufrecht erhalten.

2. Verfahren nach Anspruch 1, wobei der Primärnetz-Auswahlprozess entweder einem PLMN-Auswahlprozess oder einem SNPN-Auswahlprozess entspricht, und wobei der Sekundärnetz-Auswahlprozess entweder einem weiteren PLMN-Auswahlprozess oder einem weiteren SNPN-Auswahlprozess entspricht, wobei insbesondere die Mobilstation (20) entweder einer Benutzerausrüstung, die ein Teilnehmeridentitätsmodul oder eine Universal Integrated Circuit-Karte aufweist oder umfasst, oder einer Mobilausrüstung entspricht.

3. Verfahren nach einem der vorangehenden Ansprüche, wobei die Netzauswahldaten (25) in einem Teilnehmeridentitätsmodul oder einer Universal Integrated Circuit-Karte, das bzw. die mit der Mobilstation (20) verknüpft ist, gespeichert werden, wobei das Teilnehmeridentitätsmodul oder die Universal Integrated Circuit-Karte insbesondere dem Speichermodul der Mobilstation (20) entspricht, oder wobei die Netzauswahldaten (25) in dem Mobilgerät gespeichert werden,
wobei insbesondere die Netzauswahldaten (25) - insbesondere die Primärnetz-Auswahldaten (251) bezüglich der primären Verbindung der Mobilstation (20) und die Sekundärnetz-Auswahldaten (252) bezüglich der sekundären Verbindung der Mobilstation (20) - Listen bzw. Listeneinträge bezüglich verschiedener Kategorien von Mobilkommunikationsnetzen umfassen, insbesondere
- äquivalente Home Public Land Mobile-Netze oder äquivalente Home Standalone Non-Public-Netze und/oder
- benutzerdefinierte Public Land Mobile-Netze oder benutzerdefinierte Standalone Non-Public-Netze und/oder
- betreiberdefinierte Public Land Mobile-Netze oder betreiberdefinierte Standalone Non-Public-Netze und/oder
- Standalone Non-Public-Netz-Gruppenidentitäten,
wobei insbesondere solche Listen bzw. Listeneinträge Priorisierungsangaben bezüglich verschiedener Funkzugangstechnologien umfassen.

4. Verfahren nach einem der vorangehenden Ansprüche, wobei, während des dritten Schrittes, in dem Fall, dass das zweite Mobilfunknetz (200) - wie das erste Mobilfunknetz (100) - ebenfalls dafür in Frage kommt, als primäre Verbindung verwendet zu werden, oder als ein mögliches Ergebnis des Primärnetz-Auswahlprozesses, die Verbindung mit dem zweiten Mobilfunknetz (200) als die primäre Verbindung der Mobilstation (20) verwendet wird, wodurch ein erster Betriebsmodus angewendet wird, nachdem die primäre Verbindung mit dem ersten Mobilfunknetz (100) unterbrochen oder beendet wurde,
wobei insbesondere, als eine sekundäre Verbindung der Mobilstation (20), die Mobilstation (20) als ein Ergebnis eines Sekundärnetz-Auswahlprozesses, der unter Berücksichtigung der Funkumgebung sowie der Sekundärnetz-Auswahldaten (252), insbesondere des spezifischen Teils (252', 252") der Sekundärnetz-Auswahldaten (252), der dem zweiten Mobilkommunikationsnetz (200) entspricht, das als primäre Verbindung der Mobilstation (20) verwendet wird, durchgeführt wird, mit einem weiteren zweiten Mobilkommunikationsnetz (200) verbunden oder bei diesem registriert wird.

5. Verfahren nach einem der vorangehenden Ansprüche, wobei, während des dritten Schrittes und nach Ablauf eines primären Zeitintervalls im Anschluss an eine Unterbrechung oder Beendigung der primären Verbindung, der Primärnetz-Auswahlprozess als ein anfänglicher Netzauswahlprozess durchgeführt wird, der beim Einschalten oder bei Netzwiederherstellung nach mangelnder Netzabdeckung der Benutzerausrüstung (20) anzuwenden ist, wodurch ein zweiter Betriebsmodus nach Unterbrechung oder Beendigung der primären Verbindung mit dem ersten Mobilkommunikationsnetz (100) angewendet wird,
wobei insbesondere Werte, die das primäre Zeitintervall betreffen und/oder definieren, in dem Speichermodul der Mobilstation (20) und/oder als Teil der Netzauswahldaten (25) gespeichert werden,
wobei insbesondere der Sekundärnetz-Auswahlprozess periodisch gemäß einem Zeitgeber durchgeführt wird, der ein periodisches sekundäres Zeitintervall implementiert,
wobei insbesondere Werte, die das sekundäre Zeitintervall und/oder den Start des Timers betreffen und/oder definieren, in dem Speichermodul der Mobilstation (20) und/oder als Teil der Netzauswahldaten (25) gespeichert werden,
wobei insbesondere der Zeitgeber und/oder das sekundäre Zeitintervall des Sekundärnetz-Auswahlprozesses unabhängig davon ist, wann ein Primärnetz-Auswahlprozess durchgeführt wird.

6. Verfahren nach einem der vorangehenden Ansprüche, wobei, während des dritten Schrittes, die sekundäre Verbindung zwischen der Mobilstation (20) und dem zweiten Mobilkommunikationsnetz (200) nicht aufrecht erhalten wird, wodurch ein dritter Betriebsmodus angewendet wird, nachdem die primäre Verbindung mit dem ersten Mobilkommunikationsnetz (100) unterbrochen oder beendet wurde.

7. Verfahren nach einem der vorangehenden Ansprüche, wobei der spezifische Teil (252', 252") der Sekundärnetz-Auswahldaten (252), der dem ersten Mobilkommunikationsnetz (100) entspricht - oder ein spezifischer Teil (252', 252") der Sekundärnetz-Auswahldaten (252), der einem Mobilkommunikationsnetz entspricht, das als ein erstes Mobilkommunikationsnetz (100) auswählbar ist - einen Satz von Informationselementen (255, 256, 257, 258) umfasst oder diesem entspricht, wobei jedes Informationselement (255, 256, 257, 258) einem Mobilkommunikationsnetz, das als das zweite Mobilkommunikationsnetz (200) auswählbar ist, entspricht oder sich auf ein solches bezieht,
wobei bezüglich des Satzes von Informationselementen (255, 256, 257, 258) jedes spezifischen Teils (252', 252") der Sekundärnetz-Auswahldaten (252) eines oder mehrere von Folgendem verifiziert werden können:
- mindestens ein Informationselement (255, 256, 257, 258), bevorzugt jedes der Informationselemente (255, 256, 257, 258), umfasst eine Angabe, ob der erste oder der zweite Betriebsmodus anzuwenden ist oder ob der erste oder der zweite oder der dritte Betriebsmodus anzuwenden ist, nachdem die primäre Verbindung mit dem ersten Mobilkommunikationsnetz (100) unterbrochen oder beendet wurde,
- ein Informationselement (255, 256, 257, 258) bezieht sich auf mindestens ein Mobilkommunikationsnetz, das als das zweite Mobilkommunikationsnetz (200) auswählbar ist, wobei sich insbesondere jedes Informationselement (255, 256, 257, 258) auf ein einzelnes Mobilkommunikationsnetz bezieht, das als das zweite Mobilkommunikationsnetz (200) auswählbar ist,
- ein Informationselement (255, 256, 257, 258) umfasst eine Angabe für Authentifizierungszwecke (253), um auf das jeweilige Mobilkommunikationsnetz, auf das Bezug genommen wird, zuzugreifen, wobei insbesondere die Angabe für Authentifizierungszwecke (253) angibt, ob lokale Zugriffsberechtigungsinformationen oder Zugriffsberechtigungsinformationen eines Heimnetzes der Mobilstation (20) zu verwenden sind, und wobei insbesondere die Angabe für Authentifizierungszwecke (253) die Zugriffsberechtigungsinformationen umfasst, die für den Zugriff auf das jeweilige Mobilkommunikationsnetz, auf das Bezug genommen wird, zu verwenden sind,
- ein Informationselement (255, 256, 257, 258) umfasst
- insbesondere neben der Angabe für Authentifizierungszwecke (253) - eine Gültigkeitsangabe (254), wobei mittels der Gültigkeitsangabe (254) die Gültigkeit des Informationselements (255, 256, 257, 258) eingeschränkt oder zugelassen werden kann, insbesondere in Bezug auf Zeit und/oder in Bezug auf den Standort der Mobilstation (20), wobei insbesondere
- bezüglich einer Gültigkeitsangabe in Bezug auf Zeit ein spezifisch definiertes Zeitintervall insbesondere einmalig auftritt oder wiederholt auftritt und/oder periodisch und/oder bei spezifischen Ereignissen auftritt,
- bezüglich einer Gültigkeitsangabe in Bezug auf den Standort der Mobilstation (20) eine Auflösungsgenauigkeit auf der Ebene von Verfolgungsgebieten des ersten Mobilkommunikationsnetzes (100) angewendet wird, und/oder
- bezüglich einer Gültigkeitsangabe in Bezug auf den Standort der Mobilstation (20) eine oder mehrere geografische Koordinaten angegeben werden, insbesondere mit einem Radius oder insbesondere einem Polygon, der bzw. das durch mehrere geografische Koordinaten definiert wird,
- bezüglich mehrerer Gültigkeitsangaben solche Gültigkeitsangaben durch logische Operatoren verknüpft werden können, wodurch insbesondere kombinierte Gültigkeitsangaben sowohl in Bezug auf Zeit als auch auf den Standorts der Mobilstation (20) realisiert werden,
- alle Informationselemente (255, 256, 257, 258) werden während des Sekundärnetz-Auswahlprozesses berücksichtigt und werden in Betracht gezogen, insbesondere unabhängig von einer Länderangabe oder einem Mobilfunk-Ländercode, insbesondere des ersten Mobilkommunikationsnetzes (100),
- der Satz von Informationselementen (255, 256, 257, 258) ist anfällig dafür, ein leerer Satz zu sein, wobei ein solcher Fall zu einer Vermeidung einer Sekundärnetzauswahl führt, wobei insbesondere keine Sekundärnetzauswahl stattfindet.

8. Verfahren nach einem der vorangehenden Ansprüche, wobei das Verbinden mit, oder das Registrieren bei, dem zweiten Mobilkommunikationsnetz (200) durch die Mobilstation (20) unter Verwendung einer Authentifizierung und/oder unter Verwendung von Zugriffsberechtigungsinformationen gemäß einem oder mehreren von Folgendem durchgeführt wird:
- in Abhängigkeit von einer Angabe in den Netzauswahldaten (25) werden die Zugriffsberechtigungsinformationen des ersten Mobilkommunikationsnetzes (100) und/oder eines Heimnetzes der Mobilstation (20) verwendet,
- in Abhängigkeit von einer Angabe in den Netzauswahldaten (25) werden die Zugriffsberechtigungsinformationen eines Heimnetzes der Mobilstation (20) und/oder des zweiten Mobilkommunikationsnetzes (200) verwendet,
- die zu verwendenden Zugriffsberechtigungsinformationen sind bereits in dem Speichermodul der Mobilstation (20) gespeichert, insbesondere in einem Teilnehmeridentitätsmodul oder einer Universal Integrated Circuit-Karte,
- die zu verwendenden Zugriffsberechtigungsinformationen werden durch das erste Mobilkommunikationsnetz (100) und/oder durch das zweite Mobilkommunikationsnetz (200) an die Mobilstation (20) gesendet,
- eine Angabe, wie die Authentifizierung durchzuführen ist, kann explizit sein, insbesondere als Teil der Sekundärnetz-Auswahldaten (252), oder kann implizit sein, insbesondere in dem Fall, dass Zugriffsberechtigungsinformationen des zweiten Mobilkommunikationsnetzes (200) gespeichert sind, oder in dem Fall, dass das zweite Mobilkommunikationsnetz (200) einen Authentifizierungsversuch unter Verwendung von Zugriffsberechtigungsinformationen des ersten Mobilkommunikationsnetzes (100) und/oder des Heimnetzes der Mobilstation (20) ablehnt.

9. Mobilstation (20) für den Betrieb in einer Funkumgebung, umfassend mehrere Funkzellen (11, 12, 13) von mehreren Mobilkommunikationsnetzen (100, 200, 300), wobei jede dieser Funkzellen (11, 12, 13) jeweils mit mindestens einem Mobilkommunikationsnetz der mehreren Mobilkommunikationsnetze (100, 200, 300) verknüpft ist,
wobei, als eine primäre Verbindung der Mobilstation (20), die Mobilstation (20) mit einem ersten Mobilkommunikationsnetz (100) der mehreren Mobilkommunikationsnetze (100, 200, 300) verbunden oder bei diesem registriert wird und, zusätzlich und als eine sekundäre Verbindung der Mobilstation (20), mit einem zweiten Mobilkommunikationsnetz (200) der mehreren Mobilkommunikationsnetze (100, 200, 300) verbunden oder bei diesem registriert werden kann,
wobei die Mobilstation (20) als ein Ergebnis eines Primärnetz-Auswahlprozesses, der unter Berücksichtigung der Funkumgebung sowie von Netzauswahldaten (25), die in einem Speichermodul der Mobilstation (20) gespeichert sind, durchgeführt wird, mit dem ersten Mobilkommunikationsnetz (100) verbunden oder bei diesem registriert ist, wobei sich mindestens ein Teil der Netzauswahldaten (25) auf das erste Mobilkommunikationsnetz (100) bezieht oder dieses angibt, wobei die Netzauswahldaten (25) Listen oder Listeneinträge als Primärnetz-Auswahldaten (251) bezüglich der primären Verbindung der Mobilstation (20) umfassen, wobei die Primärnetz-Auswahldaten (251) durch die Mobilstation (20) während des Primärnetz-Auswahlprozesses verwendet werden, wobei der Primärnetz-Auswahlprozess dazu führt, dass die Mobilstation (20) mit dem ersten Mobilkommunikationsnetz (100) verbunden oder bei diesem registriert ist,
wobei, damit die Mobilstation (20) zusätzlich mit dem zweiten Mobilkommunikationsnetz (200) verbunden oder bei diesem registriert werden kann, die Mobilstation (20) so eingerichtet ist, dass:
- die Mobilstation (20) Sekundärnetz-Auswahldaten (252) bezüglich der sekundären Verbindung der Mobilstation (20) umfasst oder empfängt, wobei sich die Sekundärnetz-Auswahldaten (252) mindestens teilweise auf das erste Mobilkommunikationsnetz (100) beziehen und mindestens das zweite Mobilkommunikationsnetz (200) angeben, wobei die Sekundärnetz-Auswahldaten (252) außerdem Teil der Netzauswahldaten (25) sind, wobei spezifische Teile (252', 252") der Sekundärnetz-Auswahldaten (252) den Primärnetz-Auswahldaten (251) zugewiesen werden, wobei jeder spezifische Teil (252', 252") einem der Mobilkommunikationsnetze entspricht, das als das erste Mobilkommunikationsnetz (100) auswählbar ist,
- die Mobilstation (20) als ein Ergebnis eines Sekundärnetz-Auswahlprozesses, der unter Berücksichtigung der Funkumgebung sowie des spezifischen Teils (252', 252") der Sekundärnetz-Auswahldaten (252), der dem ersten Mobilkommunikationsnetz (100) entspricht, durchgeführt wird, zusätzlich zum Verbinden mit, oder Registrieren bei, dem ersten Mobilkommunikationsnetz (100) mit dem zweiten Mobilkommunikationsnetz (200) verbunden oder bei diesem registriert ist,
- in dem Fall, dass die primäre Verbindung mit dem ersten Mobilkommunikationsnetz (100) unterbrochen oder beendet wird, während die sekundäre Verbindung mit dem zweiten Mobilkommunikationsnetz (200) noch aktiv oder verfügbar ist, die sekundäre Verbindung zwischen der Mobilstation (20) und dem zweiten Mobilkommunikationsnetz (200) aufrecht erhalten wird.

10. System oder Mobilkommunikationsnetz (100, 200) zum Betreiben einer Mobilstation (20), die sich in einer Funkumgebung befindet, die mehrere Funkzellen (11, 12, 13) von mehreren Mobilkommunikationsnetzen (100, 200, 300) umfasst, wobei jede dieser Funkzellen (11, 12, 13) jeweils mit mindestens einem Mobilkommunikationsnetz der mehreren Mobilkommunikationsnetze (100, 200, 300) verknüpft ist,
wobei, als eine primäre Verbindung der Mobilstation (20), die Mobilstation (20) mit einem ersten Mobilkommunikationsnetz (100) der mehreren Mobilkommunikationsnetze (100, 200, 300) verbunden oder bei diesem registriert ist und, zusätzlich und als eine sekundäre Verbindung der Mobilstation (20), mit einem zweiten Mobilkommunikationsnetz (200) der mehreren Mobilkommunikationsnetze (100, 200, 300) verbunden oder bei diesem registriert sein kann,
wobei die Mobilstation (20) als ein Ergebnis eines Primärnetz-Auswahlprozesses, der unter Berücksichtigung der Funkumgebung sowie von Netzauswahldaten (25), die in einem Speichermodul der Mobilstation (20) gespeichert sind, durchgeführt wird, mit dem ersten Mobilkommunikationsnetz (100) verbunden oder bei diesem registriert ist, wobei sich mindestens ein Teil der Netzauswahldaten (25) auf das erste Mobilkommunikationsnetz (100) bezieht oder dieses angibt, wobei die Netzauswahldaten (25) Listen oder Listeneinträge als Primärnetz-Auswahldaten (251) bezüglich der primären Verbindung der Mobilstation (20) umfassen, wobei die Primärnetz-Auswahldaten (251) durch die Mobilstation (20) während des Primärnetz-Auswahlprozesses verwendet werden, wobei der Primärnetz-Auswahlprozess dazu führt, dass die Mobilstation (20) mit dem ersten Mobilkommunikationsnetz (100) verbunden oder bei diesem registriert ist,
wobei, damit die Mobilstation (20) zusätzlich mit dem zweiten Mobilkommunikationsnetz (200) verbunden oder bei diesem registriert werden kann, das System oder das Mobilkommunikationsnetz (100, 200) so eingerichtet ist, dass:
- die Mobilstation (20) Sekundärnetz-Auswahldaten (252) bezüglich der sekundären Verbindung der Mobilstation (20) umfasst oder empfängt, wobei sich die Sekundärnetz-Auswahldaten (252) mindestens teilweise auf das erste Mobilkommunikationsnetz (100) beziehen und mindestens das zweite Mobilkommunikationsnetz (200) angeben, wobei die Sekundärnetz-Auswahldaten (252) außerdem Teil der Netzauswahldaten (25) sind, wobei spezifische Teile (252', 252") der Sekundärnetz-Auswahldaten (252) den Primärnetz-Auswahldaten (251) zugewiesen werden, wobei jeder spezifische Teil (252', 252") einem der Mobilkommunikationsnetze entspricht, das als das erste Mobilkommunikationsnetz (100) auswählbar ist,
- die Mobilstation (20) als ein Ergebnis eines Sekundärnetz-Auswahlprozesses, der unter Berücksichtigung der Funkumgebung sowie des spezifischen Teils (252', 252") der Sekundärnetz-Auswahldaten (252), der dem ersten Mobilkommunikationsnetz (100) entspricht, durchgeführt wird, zusätzlich zum Verbinden mit, oder Registrieren bei, dem ersten Mobilkommunikationsnetz (100) mit dem zweiten Mobilkommunikationsnetz (200) verbunden oder bei diesem registriert ist,
- in dem Fall, dass die primäre Verbindung mit dem ersten Mobilkommunikationsnetz (100) unterbrochen oder beendet wird, während die sekundäre Verbindung mit dem zweiten Mobilkommunikationsnetz (200) noch aktiv oder verfügbar ist, die sekundäre Verbindung zwischen der Mobilstation (20) und dem zweiten Mobilkommunikationsnetz (200) aufrecht erhalten wird.

11. Programm, umfassend einen computerlesbaren Programmcode, der, wenn er auf einem Computer und/oder in einer Mobilstation (20) und/oder in einem Netzknoten eines Mobilkommunikationsnetzes (100) oder teilweise in einer Mobilstation (20) und/oder teilweise in einem Netzknoten eines Mobilkommunikationsnetzes (100) ausgeführt wird, den Computer und/oder die Mobilstation (20) und/oder den Netzknoten des Mobilkommunikationsnetzes (100) veranlasst, ein Verfahren nach einem der Ansprüche 1 bis 8 durchzuführen.

12. Computerlesbares Medium, umfassend Instruktionen, die, wenn sie auf einem Computer und/oder in einer Mobilstation (20) und/oder in einem Netzknoten eines Mobilkommunikationsnetzes (100) oder teilweise in einer Mobilstation (20) und/oder teilweise in einem Netzknoten eines Mobilkommunikationsnetzes (100) ausgeführt werden, den Computer und/oder die Mobilstation (20) und/oder den Netzknoten des Mobilkommunikationsnetzes (100) veranlassen, ein Verfahren nach einem der Ansprüche 1 bis 8 durchzuführen.

## Revendications

1. Procédé d'exploitation d'une station mobile (20) se trouvant dans un environnement radio comprenant une pluralité de cellules radio (11, 12, 13) d'une pluralité de réseaux de communication mobile (100, 200, 300), chacune de ces cellules radio (11, 12, 13) étant associée, respectivement, à au moins un réseau de communication mobile de la pluralité de réseaux de communication mobile (100, 200, 300),
dans lequel, en tant que connexion primaire de la station mobile (20), la station mobile (20) est connectée ou enregistrée sur un premier réseau de communication mobile (100) de la pluralité de réseaux de communication mobile (100, 200, 300) et est, en outre et en tant que connexion secondaire de la station mobile (20), capable d'être connectée ou enregistrée sur un deuxième réseau de communication mobile (200) de la pluralité de réseaux de communication mobile (100, 200, 300),
dans lequel la station mobile (20) est connectée ou enregistrée sur le premier réseau de communication mobile (100) à la suite d'un processus de sélection de réseau primaire exécuté en tenant compte de l'environnement radio ainsi que de données de sélection de réseau (25) stockées dans un module de mémoire de la station mobile (20), dans lequel au moins une partie des données de sélection de réseau (25) se rapporte ou indique le premier réseau de communication mobile (100), dans lequel les données de sélection de réseau (25) comprennent des listes ou des entrées de liste en tant que données de sélection de réseau primaire (251) concernant la connexion primaire de la station mobile (20), les données de sélection de réseau primaire (251) étant utilisées par la station mobile (20) lors du processus de sélection de réseau primaire, le processus de sélection de réseau primaire aboutissant à la connexion ou à l'enregistrement de la station mobile (20) sur le premier réseau de communication mobile (100),
dans lequel, pour que la station mobile (20) soit en outre connectée ou enregistrée sur le deuxième réseau de communication mobile (200), le procédé comprend les étapes suivantes :
- dans une première étape, la station mobile (20) comprend ou reçoit des données de sélection de réseau secondaire (252) concernant la connexion secondaire de la station mobile (20), les données de sélection de réseau secondaire (252) se rapportant, au moins en partie, au premier réseau de communication mobile (100) et indiquant au moins le deuxième réseau de communication mobile (200), dans lequel les données de sélection de réseau secondaire (252) font également partie des données de sélection de réseau (25), dans lequel des parties spécifiques (252', 252") des données de sélection de réseau secondaire (252) sont assignées aux données de sélection de réseau primaire (251), chaque partie spécifique (252', 252") correspondant à l'un des réseaux de communication mobile pouvant être sélectionné en tant que premier réseau de communication mobile (100),
- dans une deuxième étape, la station mobile (20) est connectée ou enregistrée sur le deuxième réseau de communication mobile (200) - en plus d'être connectée ou enregistrée sur le premier réseau de communication mobile (100) - à la suite d'un processus de sélection de réseau secondaire exécuté en tenant compte de l'environnement radio ainsi que de la partie spécifique (252', 252") des données de sélection de réseau secondaire (252) qui correspond au premier réseau de communication mobile (100),
- dans une troisième étape, et dans le cas où la connexion primaire au premier réseau de communication mobile (100) est interrompue ou terminée alors que la connexion secondaire au deuxième réseau de communication mobile (200) est toujours active ou disponible, la connexion secondaire entre la station mobile (20) et le deuxième réseau de communication mobile (200) est maintenue.

2. Procédé selon la revendication 1, dans lequel le processus de sélection de réseau primaire correspond soit à un processus de sélection PLMN, soit à un processus de sélection SNPN, et dans lequel le processus de sélection de réseau secondaire correspond soit à un autre processus de sélection PLMN, soit à un autre processus de sélection SNPN, dans lequel, en particulier, la station mobile (20) correspond soit à un équipement utilisateur ayant ou comprenant un module d'identité d'abonné ou une carte à circuit intégré universelle, soit à un équipement mobile.

3. Procédé selon l'une des revendications précédentes, dans lequel les données de sélection de réseau (25) sont stockées sur un module d'identité d'abonné ou une carte à circuit intégré universelle associée à la station mobile (20), le module d'identité d'abonné ou la carte à circuit intégré universelle correspondant en particulier au module mémoire de la station mobile (20), ou dans lequel les données de sélection de réseau (25) sont stockées sur l'équipement mobile,
dans lequel, en particulier, les données de sélection de réseau (25) - en particulier les données de sélection de réseau primaire (251) concernant la connexion primaire de la station mobile (20) et les données de sélection de réseau secondaire (252) concernant la connexion secondaire de la station mobile (20) - comprennent des listes ou des entrées de liste, respectivement, concernant différentes catégories de réseaux de communication mobile, en particulier :
- des réseaux mobiles terrestres publics domestiques équivalents ou des réseaux non publics autonomes domestiques équivalents, et/ou
- des réseaux mobiles terrestres publics définis par l'utilisateur ou des réseaux non publics autonomes définis par l'utilisateur, et/ou
- des réseaux mobiles terrestres publics définis par l'opérateur ou des réseaux non publics autonomes définis par l'opérateur,
- des identités de groupe de réseaux non publics autonomes,
dans lequel, en particulier, ces listes ou entrées de liste, respectivement, comprennent des indications de priorité concernant différentes technologies d'accès radio.

4. Procédé selon l'une des revendications précédentes, dans lequel, lors de la troisième étape, dans le cas où le deuxième réseau de communication mobile (200) est - comme le premier réseau de communication mobile (100) - également susceptible d'être utilisé comme connexion primaire ou comme résultat possible du processus de sélection de réseau primaire, la connexion au deuxième réseau de communication mobile (200) est utilisée comme connexion primaire de la station mobile (20), appliquant ainsi un premier mode de fonctionnement après que la connexion primaire au premier réseau de communication mobile (100) a été interrompue ou terminée,
dans lequel, en particulier, en tant que connexion secondaire de la station mobile (20), la station mobile (20) est connectée ou enregistrée sur un autre deuxième réseau de communication mobile (200) à la suite d'un processus de sélection de réseau secondaire exécuté en tenant compte de l'environnement radio ainsi que des données de sélection de réseau secondaire (252), en particulier de la partie spécifique (252', 252'') des données de sélection de réseau secondaire (252) correspondant au deuxième réseau de communication mobile (200) utilisé en tant que connexion primaire de la station mobile (20).

5. Procédé selon l'une des revendications précédentes, dans lequel, lors de la troisième étape et après écoulement d'un intervalle de temps primaire suivant l'interruption ou la terminaison de la connexion primaire, le processus de sélection de réseau primaire est exécuté en tant que processus de sélection de réseau initial à appliquer à la mise sous tension ou lors de la reprise après un manque de couverture de l'équipement utilisateur (20), appliquant ainsi un deuxième mode de fonctionnement après que la connexion primaire au premier réseau de communication mobile (100) a été interrompue ou terminée,
dans lequel, en particulier, des valeurs concernant et/ou définissant l'intervalle de temps primaire sont stockées dans le module de mémoire de la station mobile (20) et/ou font partie des données de sélection de réseau (25),
dans lequel, en particulier, le processus de sélection de réseau secondaire est exécuté périodiquement en fonction d'un temporisateur mettant en oeuvre un intervalle de temps secondaire périodique,
dans lequel, en particulier, des valeurs concernant et/ou définissant l'intervalle de temps secondaire et/ou le démarrage du temporisateur sont stockées dans le module de mémoire de la station mobile (20) et/ou font partie des données de sélection de réseau (25),
dans lequel, en particulier, le temporisateur et/ou l'intervalle de temps secondaire du processus de sélection de réseau secondaire sont indépendants du moment où le processus de sélection de réseau primaire est exécuté.

6. Procédé selon l'une des revendications précédentes, dans lequel, lors de la troisième étape, la connexion secondaire entre la station mobile (20) et le deuxième réseau de communication mobile (200) n'est pas maintenue, appliquant ainsi un troisième mode de fonctionnement après que la connexion primaire au premier réseau de communication mobile (100) a été interrompue ou terminée.

7. Procédé selon l'une des revendications précédentes, dans lequel la partie spécifique (252', 252'') des données de sélection de réseau secondaire (252) qui correspond au premier réseau de communication mobile (100) - ou une partie spécifique (252', 252'') des données de sélection de réseau secondaire (252) qui correspond à un réseau de communication mobile pouvant être sélectionné comme premier réseau de communication mobile (100) - comprend ou correspond à un ensemble d'éléments d'information (255, 256, 257, 258), chaque élément d'information (255, 256, 257, 258) correspondant ou se référant à un réseau de communication mobile pouvant être sélectionné comme deuxième réseau de communication mobile (200),
dans lequel, en ce qui concerne l'ensemble des éléments d'information (255, 256, 257, 258) de chaque partie spécifique (252', 252'') des données de sélection de réseau secondaire (252), un ou plusieurs des points suivants peuvent être vérifiés :
- au moins un élément d'information (255, 256, 257, 258), de préférence chacun des éléments d'information (255, 256, 257, 258), comprend une indication du fait que le premier ou le deuxième mode de fonctionnement doit être appliqué ou que le premier, le deuxième ou le troisième mode de fonctionnement doit être appliqué après que la connexion primaire au premier réseau de communication mobile (100) a été interrompue ou terminée,
- un élément d'information (255, 256, 257, 258) se réfère à au moins un réseau de communication mobile pouvant être sélectionné comme deuxième réseau de communication mobile (200), en particulier chaque élément d'information (255, 256, 257, 258) se réfère à un réseau de communication mobile pouvant être sélectionné comme deuxième réseau de communication mobile (200),
- un élément d'information (255, 256, 257, 258) comprend une indication à des fins d'authentification (253) afin d'accéder au réseau de communication mobile respectif référencé, en particulier l'indication à des fins d'authentification (253) indique s'il faut utiliser des informations d'identification locales ou des informations d'identification d'un réseau de rattachement de la station mobile (20), et en particulier l'indication à des fins d'authentification (253) comprend les informations d'identification à utiliser pour accéder au réseau de communication mobile respectif référencé,
- un élément d'information (255, 256, 257, 258) comprend une indication de validité (254) - en particulier en plus de l'indication à des fins d'authentification (253) -, l'indication de validité (254) permettant de restreindre ou d'autoriser la validité de l'élément d'information (255, 256, 257, 258), en particulier par rapport au temps et/ou par rapport à la localisation de la station mobile (20), dans lequel en particulier
- en ce qui concerne une indication de validité par rapport au temps, un intervalle de temps spécifiquement défini, en particulier se produisant une seule fois ou se produisant de manière répétée et/ou périodique et/ou lors d'événements spécifiques,
- en ce qui concerne une indication de validité par rapport à la localisation de la station mobile (20), une granularité au niveau des zones de suivi du premier réseau de communication mobile (100) est appliquée, et/ou
- en ce qui concerne une indication de validité par rapport à la localisation de la station mobile (20), une ou plusieurs coordonnées géographiques sont indiquées, en particulier avec un rayon ou en particulier un polygone défini par une pluralité de coordonnées géographiques,
- en ce qui concerne une pluralité d'indications de validité, ces indications de validité peuvent être liées par des opérateurs logiques, ce qui permet en particulier de réaliser des indications de validité combinées par rapport à la fois du temps et de la localisation de la station mobile (20),
- tous les éléments d'information (255, 256, 257, 258) sont considérés et pris en considération lors du processus de sélection de réseau secondaire, en particulier indépendamment d'une indication de pays ou d'un code de pays de mobile, en particulier du premier réseau de communication mobile (100),
- l'ensemble des éléments d'information (255, 256, 257, 258) est susceptible d'être un ensemble vide, ce qui a pour effet d'éviter une sélection de réseau secondaire, en particulier aucune sélection de réseau secondaire n'a lieu.

8. Procédé selon l'une des revendications précédentes, dans lequel la connexion ou l'enregistrement sur le deuxième réseau de communication mobile (200) est effectué par la station mobile (20) à l'aide d'une authentification et/ou d'une information d'identification selon une ou plusieurs des modalités suivantes :
- en fonction d'une indication dans les données de sélection de réseau (25), les informations d'identification du premier réseau de communication mobile (100) et/ou d'un réseau de rattachement de la station mobile (20) sont utilisées,
- en fonction d'une indication dans les données de sélection de réseau (25), les informations d'identification d'un réseau de rattachement de la station mobile (20) et/ou du deuxième réseau de communication mobile (200) sont utilisées,
- les informations d'identification à utiliser sont déjà stockées dans le module de mémoire de la station mobile (20), en particulier dans un module d'identité d'abonné ou une carte à circuit intégré universelle,
- les informations d'identification à utiliser sont transmises, par le premier réseau de communication mobile (100) et/ou par le deuxième réseau de communication mobile (200), à la station mobile (20),
- une indication sur la manière d'effectuer l'authentification peut être explicite, en particulier comme faisant partie des données de sélection de réseau secondaire (252), ou implicite, en particulier dans le cas où les informations d'identification du deuxième réseau de communication mobile (200) sont stockées ou dans le cas où le deuxième réseau de communication mobile (200) rejette une tentative d'authentification utilisant les informations d'identification du premier réseau de communication mobile (100) et/ou du réseau de rattachement de la station mobile (20) .

9. Station mobile (20) destinée à être exploitée dans un environnement radio comprenant une pluralité de cellules radio (11, 12, 13) d'une pluralité de réseaux de communication mobile (100, 200, 300), chacune de ces cellules radio (11, 12, 13) étant associée, respectivement, à au moins un réseau de communication mobile de la pluralité de réseaux de communication mobile (100, 200, 300),
dans lequel, en tant que connexion primaire de la station mobile (20), la station mobile (20) est connectée ou enregistrée sur un premier réseau de communication mobile (100) de la pluralité de réseaux de communication mobile (100, 200, 300) et est, en outre et en tant que connexion secondaire de la station mobile (20), capable d'être connectée ou enregistrée sur un deuxième réseau de communication mobile (200) de la pluralité de réseaux de communication mobile (100, 200, 300),
dans lequel la station mobile (20) est connectée ou enregistrée sur le premier réseau de communication mobile (100) à la suite d'un processus de sélection de réseau primaire exécuté en tenant compte de l'environnement radio ainsi que de données de sélection de réseau (25) stockées dans un module de mémoire de la station mobile (20), dans lequel au moins une partie des données de sélection de réseau (25) se rapporte ou indique le premier réseau de communication mobile (100), dans lequel les données de sélection de réseau (25) comprennent des listes ou des entrées de liste en tant que données de sélection de réseau primaire (251) concernant la connexion primaire de la station mobile (20), les données de sélection de réseau primaire (251) étant utilisées par la station mobile (20) lors du processus de sélection de réseau primaire, le processus de sélection de réseau primaire aboutissant à la connexion ou à l'enregistrement de la station mobile (20) sur le premier réseau de communication mobile (100),
dans lequel, pour que la station mobile (20) soit en outre connectée ou enregistrée sur le deuxième réseau de communication mobile (200), la station mobile (20) est configurée de telle sorte que :
- la station mobile (20) comprend ou reçoit des données de sélection de réseau secondaire (252) concernant la connexion secondaire de la station mobile (20), les données de sélection de réseau secondaire (252) se rapportant, au moins en partie, au premier réseau de communication mobile (100) et indiquant au moins le deuxième réseau de communication mobile (200), dans lequel les données de sélection de réseau secondaire (252) font également partie des données de sélection de réseau (25), dans lequel des parties spécifiques (252', 252'') des données de sélection de réseau secondaire (252) sont assignées aux données de sélection de réseau primaire (251), chaque partie spécifique (252', 252") correspondant à l'un des réseaux de communication mobile pouvant être sélectionné en tant que premier réseau de communication mobile (100),
- la station mobile (20) est connectée ou enregistrée sur le deuxième réseau de communication mobile (200) - en plus d'être connectée ou enregistrée sur le premier réseau de communication mobile (100) - à la suite d'un processus de sélection de réseau secondaire exécuté en tenant compte de l'environnement radio ainsi que de la partie spécifique (252', 252'') des données de sélection de réseau secondaire (252) qui correspond au premier réseau de communication mobile (100),
- dans le cas où la connexion primaire au premier réseau de communication mobile (100) est interrompue ou terminée alors que la connexion secondaire au deuxième réseau de communication mobile (200) est toujours active ou disponible, la connexion secondaire entre la station mobile (20) et le deuxième réseau de communication mobile (200) est maintenue.

10. Système ou réseau de communication mobile (100, 200) pour l'exploitation d'une station mobile (20) se trouvant dans un environnement radio comprenant une pluralité de cellules radio (11, 12, 13) d'une pluralité de réseaux de communication mobile (100, 200, 300), chacune de ces cellules radio (11, 12, 13) étant associée, respectivement, à au moins un réseau de communication mobile de la pluralité de réseaux de communication mobile (100, 200, 300),
dans lequel, en tant que connexion primaire de la station mobile (20), la station mobile (20) est connectée ou enregistrée sur un premier réseau de communication mobile (100) de la pluralité de réseaux de communication mobile (100, 200, 300) et est, en outre et en tant que connexion secondaire de la station mobile (20), capable d'être connectée ou enregistrée sur un deuxième réseau de communication mobile (200) de la pluralité de réseaux de communication mobile (100, 200, 300),
dans lequel la station mobile (20) est connectée ou enregistrée sur le premier réseau de communication mobile (100) à la suite d'un processus de sélection de réseau primaire exécuté en tenant compte de l'environnement radio ainsi que de données de sélection de réseau (25) stockées dans un module de mémoire de la station mobile (20), dans lequel au moins une partie des données de sélection de réseau (25) se rapporte ou indique le premier réseau de communication mobile (100), dans lequel les données de sélection de réseau (25) comprennent des listes ou des entrées de liste en tant que données de sélection de réseau primaire (251) concernant la connexion primaire de la station mobile (20), les données de sélection de réseau primaire (251) étant utilisées par la station mobile (20) lors du processus de sélection de réseau primaire, le processus de sélection de réseau primaire aboutissant à la connexion ou à l'enregistrement de la station mobile (20) sur le premier réseau de communication mobile (100),
dans lequel, pour que la station mobile (20) soit en outre connectée ou enregistrée sur le deuxième réseau de communication mobile (200), le système ou le réseau de communication mobile (100, 200) est configuré de telle sorte que :
- la station mobile (20) comprend ou reçoit des données de sélection de réseau secondaire (252) concernant la connexion secondaire de la station mobile (20), les données de sélection de réseau secondaire (252) se rapportant, au moins en partie, au premier réseau de communication mobile (100) et indiquant au moins le deuxième réseau de communication mobile (200), dans lequel les données de sélection de réseau secondaire (252) font également partie des données de sélection de réseau (25), dans lequel des parties spécifiques (252', 252'') des données de sélection de réseau secondaire (252) sont assignées aux données de sélection de réseau primaire (251), chaque partie spécifique (252', 252") correspondant à l'un des réseaux de communication mobile pouvant être sélectionné en tant que premier réseau de communication mobile (100),
- la station mobile (20) est connectée ou enregistrée sur le deuxième réseau de communication mobile (200) - en plus d'être connectée ou enregistrée sur le premier réseau de communication mobile (100) - à la suite d'un processus de sélection de réseau secondaire exécuté en tenant compte de l'environnement radio ainsi que de la partie spécifique (252', 252'') des données de sélection de réseau secondaire (252) qui correspond au premier réseau de communication mobile (100),
- dans le cas où la connexion primaire au premier réseau de communication mobile (100) est interrompue ou terminée alors que la connexion secondaire au deuxième réseau de communication mobile (200) est toujours active ou disponible, la connexion secondaire entre la station mobile (20) et le deuxième réseau de communication mobile (200) est maintenue.

11. Programme comprenant un code de programme lisible par ordinateur qui, lorsqu'il est exécuté sur un ordinateur et/ou sur une station mobile (20) et/ou sur un noeud de réseau d'un réseau de communication mobile (100), ou en partie sur une station mobile (20) et/ou en partie sur un noeud de réseau d'un réseau de communication mobile (100), amène l'ordinateur et/ou la station mobile (20) et/ou le noeud de réseau du réseau de communication mobile (100) à mettre en oeuvre un procédé selon l'une des revendications 1 à 8.

12. Support lisible par ordinateur comprenant des instructions qui, lorsqu'elles sont exécutées sur un ordinateur et/ou sur une station mobile (20) et/ou sur un noeud de réseau d'un réseau de communication mobile (100), ou en partie sur une station mobile (20) et/ou en partie sur un noeud de réseau d'un réseau de communication mobile (100), amènent l'ordinateur et/ou la station mobile (20) et/ou le noeud de réseau du réseau de communication mobile (100) à mettre en oeuvre un procédé selon l'une des revendications 1 à 8.
